(19) Europäisches Patentamt
European Patent Office
Office européen des brevets

(11) **EP 4 011 845 A1**

(12) **EUROPÄISCHE PATENTANMELDUNG**

(43) Veröffentlichungstag:
**15.06.2022 Patentblatt 2022/24**

(21) Anmeldenummer: **21213484.5**

(22) Anmeldetag: **09.12.2021**

(51) Internationale Patentklassifikation (IPC):
*C03C 10/00* (2006.01)    *C03C 17/22* (2006.01)
*C03C 17/245* (2006.01)    *C03C 17/34* (2006.01)

(52) Gemeinsame Patentklassifikation (CPC):
**C03C 17/225; C03C 10/0027; C03C 17/245;**
**C03C 17/3435;** C03C 2217/214; C03C 2217/22;
C03C 2217/23; C03C 2217/24; C03C 2217/78;
C03C 2218/154; C03C 2218/365

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **14.12.2020 DE 102020133286**

(71) Anmelder: **SCHOTT AG**
**55122 Mainz (DE)**

(72) Erfinder:
• **HENN, Christian**
**55546 Frei-Laubersheim (DE)**
• **KNOCHE, Silke**
**55291 Saulheim (DE)**
• **SCHILLING, Dr. Franziska**
**55288 Udenheim (DE)**

(74) Vertreter: **Blumbach · Zinngrebe Patentanwälte PartG mbB**
**Alexandrastraße 5**
**65187 Wiesbaden (DE)**

(54) **SEMITRANSPARENTE ODER TRANSPARENTE VERSCHLEISSSCHUTZSCHICHT, SUBSTRAT MIT DERARTIGER VERSCHLEISSSCHUTZSCHICHT UND VERFAHREN ZU DEREN HERSTELLUNG**

(57)    Die vorliegende Erfindung betrifft eine semitransparente oder transparente Verschleißschutzschicht für Substrate. Die Erfindung betrifft ferner auch ein Substrat mit einer derartigen semitransparenten oder transparenten Verschleißschutzschicht und ein Verfahren zu deren Herstellung.

Die Verschleißschutzschicht ist dabei auf zumindest einer Oberfläche des Substrates zumindest bereichsweise ausgebildet und weist eine Buntheit im CIELAB-Farbsystem von C* kleiner 14, bevorzugt kleiner 7 und besonders bevorzugt kleiner 4 auf bei Lichteinstrahlung, gemessen in Remission bei Normlichtart A oder Normlichtart C oder bei Schwarzkörperstrahlung mit einer Temperatur zwischen 2.500 K und 10.000 K.

Dabei weist die Verschleißschutzschicht ferner einen Lichttransmissionsgrad im sichtbaren Wellenlängenspektrum zwischen 380 nm und 780 nm Wellenlänge von wenigstens 60 %, bevorzugt von wenigstens 75% und besonders bevorzugt von wenigstens 80 % auf.

Fig. 1

**EP 4 011 845 A1**

**Beschreibung**

Die vorliegende Erfindung betrifft eine semitransparente oder transparente Verschleißschutzschicht für Substrate. Die Erfindung betrifft ferner auch ein Substrat mit einer derartigen semitransparenten oder transparenten Verschleißschutzschicht und ein Verfahren zu deren Herstellung.

Aus dem Stand der Technik sind verschiedene Beschichtungen zum Schutz der Oberfläche von Gegenständen, etwa von Werkzeugen, vor Beschädigungen wie zum Beispiel Kratzern bekannt. Ein derartiges Hartstoff-Schichtsystem auf der Basis von Titan ist etwa aus dem Dokument DE 11 2014 001 619 A1 bekannt. Dieses Schichtsystem bietet eine hohe Verschleißbeständigkeit. Weitere Hartstoffschichten für Werkzeuge zeigen beispielsweise die DE 10 2017 102 642 A1 oder die DE 10 2012 107 129 A1.

Während die optischen Eigenschaften bei vielen Hartstoff-Beschichtungen, etwa für Werkzeuge, nicht im Vordergrund stehen, so verhält es sich anders, wenn die Gegenstände Substrate wie etwa Glas oder Glaskeramik betreffen, welche ebenfalls zur Erhöhung der Kratzfestigkeit oder zur Vermeidung von Verschleiß mit einer Verschleißschutzschicht auf der Oberfläche versehen werden sollen.

Derartige Glaskeramik-Substrate können beispielsweise Kochflächen oder auch Kochgeschirr umfassen. Mit einer Verschleißschutzschicht auf der Kochflächen-Oberseite kann zum Beispiel gewährleistet werden, dass eine edle Anmutung von Kochflächen auch nach vielen Jahren des Gebrauchs erhalten bleibt. So beschreibt das Dokument DE 10 2011 081 234 A1 eine derartige Hartstoffbeschichtung auf Substraten aus Glaskeramik.

Weitere Schichtsysteme sind etwa in den Dokumenten EP 2 994 784 B1 oder WO 2017/048700 A1 beschrieben.

Nachteilig ist jedoch, dass der thermische Ausdehnungskoeffizient der Beschichtung und des Substrates nur geringfügig voneinander abweichen sollten. Da zudem Glaskeramiken einen sehr niedrigen thermischen Ausdehnungskoeffizienten aufweisen, grenzt dies die Anzahl der geeigneten Beschichtungen stark ein. So weisen beispielsweise Hartstoffschichten basierend auf Aluminiumnitrid oder Bornitrid häufig zu große thermische Ausdehnungskoeffizienten auf, so dass diese nicht oder nur schwierig zur Beschichtung von Glaskeramiksubstraten eingesetzt werden können. Bei Glaskeramiksubstraten sollte daher der Ausdehnungskoeffizient der Beschichtung nicht größer sein als +/- $5*10^{-6}$ $K^{-1}$.

Eine Beschichtung zur Erhöhung der Kratzfestigkeit oder zum Schutz vor Verschleiß sollte demnach nicht nur eine hohe Härte aufweisen. Vielmehr sind auch andere Eigenschaften, insbesondere die Elastizität (E-Modul), die Oberflächenrauhigkeit, die Schichtspannungen durch unterschiedliche thermische Ausdehnungskoeffizienten von Substrat und Beschichtung sowie die Oberflächenbeschaffenheit des Substrates wichtige Faktoren für die Güte einer kratzfesten Beschichtung oder einer Verschleißschutzschicht des entsprechend beschichteten Substrates.

Darüber hinaus ist es wünschenswert, wenn entsprechend beschichtete Oberflächen von beispielsweise Glas- oder Glaskeramikgegenständen neben einer hohen Kratzfestigkeit auch eine hohe Resistenz gegenüber Verschleiß- und Politurbelastungen, wie sie sowohl während der Produktion als auch der späteren Verwendung auftreten, aufweisen.

Eine weitere Herausforderung für Verschleißschutzschichten für Glas oder Glaskeramik ist darin zu sehen, dass diese Schichten oder damit versehene Substrate, beispielsweise Kochflächen, auch bestimmten optischen Eigenschaften genügen sollen. So kann für bestimmte Anwendungen eine hohe Transparenz der Verschleißschutzschicht gewünscht sein.

Wünschenswert ist demnach eine Verschleißschutzschicht für Substrate, etwa aus Glas oder Glaskeramik, welche neben dem Schutz vor mechanischen Einwirkungen eine hohe Transparenz aufweist.

Eine Aufgabe der Erfindung ist demnach darin zu sehen, eine derartige Schicht zur Verfügung zu stellen, welche zum einen kratzresistent ist und die Oberfläche vor Verschleiß schützt, zum anderen aber auch transparent oder wenigstens semitransparent ist.

Dabei soll die Verschleißschutzschicht neben einer hohen Kratzfestigkeit auch eine erhöhte Beständigkeit gegenüber Verschleiß- und Polierbelastungen sowie gegenüber Umweltbelastungen aufweisen.

Es ist ferner eine Aufgabe der Erfindung, ein zumindest teilweise mit dieser wenigstens semitransparenten oder transparenten Verschleißschutzschicht beschichtetes Substrat zu Verfügung zu stellen. Das Substrat soll dabei insbesondere Gegenstände aus Glas oder Glaskeramik umfassen, beispielsweise Kochflächen.

Eine weitere Aufgabe der Erfindung besteht in der Bereitstellung eines entsprechenden Herstellungsverfahrens.

Die Aufgabe der Erfindung wird überraschend einfach durch den Gegenstand der unabhängigen Ansprüche gelöst. Vorteilhafte Ausgestaltungen und Weiterbildungen der Erfindung sind Gegenstand der Unteransprüche.

Die Erfindung betrifft in einem ersten Aspekt ein Substrat umfassend oder bestehend aus Glas oder Glaskeramik, mit einer wenigstens semitransparenten oder transparenten, harten Verschleißschutzschicht, wobei die Verschleißschutzschicht auf zumindest einer Oberfläche des Substrates zumindest bereichsweise oder vorzugsweise ganzflächig aufgebracht oder ausgebildet ist. In einer bevorzugten Ausführungsform ist die erfindungsgemäße Verschleißschutzschicht zudem temperaturstabil.

Die Verschleißschutzschicht weist eine Buntheit im CIELAB-Farbsystem von C* kleiner 14, bevorzugt kleiner 7 und besonders bevorzugt kleiner 4 auf bei Lichteinstrahlung, gemessen in Remission mit Licht der Normlichtart A oder der Normlichtart C oder bei Schwarzkörperstrahlung mit einer Farbtemperatur zwischen 2.500 K und 10.000 K. Die Normlichtarten D55, D65 bzw. D75 entsprechen Schwarzkörperstrahlern bei Farbtemperaturen von 5.500 K (D55), 6.500 K (D65) beziehungsweise 7.500 K (D75).

In einer bevorzugten Weiterbildung der Erfindung weist die Verschleißschutzschicht eine Buntheit im CIELAB-Farbsystem von C* kleiner 14, bevorzugt kleiner 7 und besonders bevorzugt kleiner 4 auf bei Lichteinstrahlung, gemessen in Remission mit Licht der Normlichtarten A und C oder sogar mit Licht der Normlichtarten A und C und D55 oder sogar mit Licht der Normlichtarten A und C und D55 und D65 oder sogar mit Licht der Normlichtarten A und C und D55 und D65 und D75. Dies bedeutet, dass die Verschleißschutzschicht eine entsprechend niedrige Buntheit für jede einzelne dieser Normlichtarten aufweist.

Die Buntheit C* im CIELAB-Farbsystem ist definiert durch

$$C^* = \sqrt{a^{*2} + b^{*2}}$$

wobei a* und b* die Farbkoordinaten in diesem System sind. Die Farbkoordinaten L*, a* und b* aus dem CIELAB-System lassen sich in dem Fachmann bekannter Weise in Farbkoordinaten x, y und Helligkeit Y des CIE-Farbsystems umrechnen. Die Normlichtart A entspricht dabei einem Planck'schen Strahler im Vakuum bei 2.856 K mit x = 0,4476 und y = 0,4074, die Normlichtart C entspricht dem mittlere Tageslicht bei etwa 6.800 K mit x = 0,3101 und y = 0,3162.

Zusätzlich weist die Verschleißschutzschicht eine hohe Transmission im sichtbaren Wellenlängenspektrum zwischen 380 nm und 780 nm Wellenlänge auf. Die Verschleißschutzschicht hat dabei einen Transmissionsgrad von wenigstens 60 %, bevorzugt wenigstens 75% und besonders bevorzugt wenigstens 80 %.

Dadurch wird es beispielsweise möglich, unterhalb eines mit der Verschleißschutzschicht beschichteten Substrates Leucht- oder Anzeigeelemente zu positionieren, deren Licht von einem Benutzer gut wahrgenommen werden kann, auch wenn er von der gegenüberliegenden Seite, also von oberhalb, auf das Substrat blickt. Eine gute Sichtbarkeit für den Benutzer vermag es in vorteilhafter Weise, die Betriebssicherheit zu verbessern, da beispielsweise Warnzeichen als Leucht- oder Anzeigeelemente besser und zuverlässiger erkannt werden können.

Der für die Durchsicht durch die Verschleißschutzschicht und das Substrat mindestens erforderliche Lichttransmissionsgrad der Verschleißschutzschicht kann dabei auch niedriger als 98 % sein, beispielsweise auch 96 % oder weniger betragen, oder auch weniger als 92 %. Im Einzelfall ist es günstig, den konkreten Lichttransmissionsgrad der Verschleißschutzschicht auf den Lichttransmissionsgrad des Substrates und/oder die vorgesehene Verwendung abzustimmen. Prinzipiell gilt im Sinne der Erfindung, dass ein höherer Transmissionsgrad besser ist als ein niedriger. Im Sinne der Erfindung wird dabei unter dem Begriff "semitransparent" ein Lichttransmissionsgrad im sichtbaren Wellenlängenbereich von wenigstens 60 % angenommen, wobei ein Lichttransmissionsgrad von 80 % oder mehr entsprechend als "transparent" bezeichnet wird.

In einer bevorzugten Ausführungsform kann die Verschleißschutzschicht einen Lichttransmissionsgrad im sichtbaren Wellenlängenspektrum beispielsweise zwischen 70 % und 92 %, zwischen 78 % und 90 %, zwischen 80 % und 95 %, oder beispielsweise zwischen 82 % und 98 % oder zwischen 80 % und 88 % aufweisen.

In einer nochmals weiteren, ebenfalls bevorzugten Ausführungsformen kann die Verschleißschutzschicht einen Lichttransmissionsgrad im sichtbaren Wellenlängenspektrum von wenigstens 80 % oder von wenigstens 85 %, von wenigstens 88 %, 90 % oder sogar von wenigstens 92 % oder 95 % aufweisen.

Dies ermöglicht es, ein erfindungsgemäß beschichtetes Substrat mit einem sehr hohen Lichttransmissionsgrad im sichtbaren Wellenlängenspektrum zwischen 380 nm und 780 nm Wellenlänge zur Verfügung zu stellen, wobei die Gesamttransmission im sichtbaren Wellenlängenspektrum wenigstens 60 %, bevorzugt wenigstens 75% und besonders bevorzugt wenigstens 80 %, wenigstens 85 %, wenigstens 88 %, 90 %, 92 %, 95 % betragen kann, wenn das Substrat selbst über eine entsprechend hohe Lichttransmission im sichtbaren Wellenlängenbereich verfügt.

Die Erfindung macht es aber insbesondere auch möglich, die wenigstens semitransparente Verschleißschutzschicht auf Substrate mit geringerem Lichttransmissionsgrad aufzubringen. Es liegt daher auch im Sinne der vorliegenden Erfindung, volumengefärbte Substrate, also eingefärbte Gläser oder Glaskeramiken, mit geringerem oder insgesamt niedrigen Lichttransmissionsgrad mit der erfindungsgemäßen Verschleißschutzschicht zu versehen. Insbesondere können dies dunkel oder auch schwarz eingefärbte Substrate sein, also dunkel oder schwarz eingefärbte Gläser oder Glaskeramiken, welche über einen Lichttransmissionsgrad von weniger als 40%, weniger als 20 %, weniger als 10 % oder sogar noch darunter, etwa zwischen 0,5 % und 8 % oder zwischen 0,5 % und 5 %, oder zwischen 1,5 % und 3 % verfügen.

Wenn hier eine Verschleißschutzschicht mit entsprechend hohem Lichttransmissionsgrad gewählt wird, ist es möglich, auch bei einem Substrat mit geringerem Lichttransmissionsgrad noch eine Sichtbarkeit von Leucht- oder Anzeigeelemente durch das mit der Verschleißschutzschicht beschichtete Substrat hindurch zu gewährleisten. Dabei ist zu berücksichtigen, dass der Lichttransmissionsgrad der Verschleißschutzschicht umso höher sein sollte, je niedriger derjenige des Substrates ist. Liegt der Lichttransmissionsgrad des Substrates beispielsweise bei weniger als 20 %, so sollte der Lichttransmissionsgrad der Verschleißschutzschicht vorzugsweise wenigstens 80 %, bevorzugt wenigstens 85 % und besonders bevorzugt wenigstens 90 % betragen.

Der Lichttransmissionsgrad der Verschleißschutzschicht kann wie folgt bestimmt werden: Zuerst wird der Lichttransmissionsgrad des Substrates $\tau_S$ ohne Beschichtung gemäß DIN EN 410 bestimmt. Dann wird der Lichttransmissionsgrad des beschichteten Substrats $\tau_B$ gemäß DIN EN 410 bestimmt, wobei die Beschichtung auf der der Lichtquelle zugewandten Seite des Substrats angeordnet ist. Der Lichttransmissionsgrad der Beschichtung entspricht dann dem Quotienten $\tau_B/\tau_S$. Zum Messen des Lichttransmissionsgrads kann die Verschleißschutzschicht auf ein Substrat mit einer Dicke von 4 mm aufgetragen werden, welches über einen hohen Transmissionsgrad von wenigstens 90 % oder darüber verfügt.

Es ist hiervon unbenommen, dass das Substrat auch über weitere Schichten oder Bereiche verfügen kann, welche abweichende Lichttransmissionsgrade aufweisen können. In einer besonderen Ausführungsform kann das Substrat eine weitere Beschichtung auf der der Verschleißschutzschicht gegenüberliegenden Oberfläche des Substrates umfassen, etwa in Form einer Unterseitenbeschichtung. Von Vorteil ist das Substrat zumindest dann transparent ausgebildet, wenn die Unterseitenbeschichtung Elemente enthält, welche für den Benutzer optisch mit dem menschlichen Auge erfassbar sein sollen, etwa im Fall von Dekorschichten als Unterseitenbeschichtung.

Die Erfindung ermöglicht es damit, ein Substrat mit einer harten Verschleißschutzschicht in Verbindung mit einer Unterseitenbeschichtung, beispielsweise mit einer Dekorschicht als Unterseitenbeschichtung, zur Verfügung zu stellen, wobei aufgrund des sehr hohen Lichttransmissionsgrads im sichtbaren Wellenlängenspektrum auch sehr feine Strukturen der Unterseitenbeschichtung von einem Benutzer erkannt werden können, wenn er auf die mit der Verschleißschutzschicht versehene Oberfläche des Substrates schaut.

In anderen Worten, der sehr hohe Lichttransmissionsgrad im sichtbaren Wellenlängenspektrum des beschichteten Substrates ermöglicht es, dass das menschliche Auge selbst extrem feine Strukturen der Unterseitenbeschichtung mit einem Abstand von etwa 0,15 mm bei Durchsicht durch das beschichtete Substrat aus einem Abstand von etwa 25 cm erkennen kann.

Die erfindungsgemäße Verschleißschutzschicht zeichnet sich zudem dadurch aus, dass sie farbneutral ist. Diese Eigenschaft hat beispielsweise in Kombination mit einer Unterseitenbeschichtung den Vorteil, dass der Farbeindruck der Unterseitenbeschichtung nicht durch die Farbigkeit der Verschleißschutzschicht oder der Kombination der Unterseitenbeschichtung mit dem Substrat, beispielsweise Glaskeramik, oder nur des Substrates, beispielsweise der Glaskeramik, im Fall eines Substrates ohne Unterseitenbeschichtung, verändert wird.

Allgemein wird dabei ein Farbabstand von $\Delta E_{p,v} < 4$, bevorzugt $\Delta E_{p,v} < 2$ und besonders bevorzugt $\Delta E_{p,v} E < 1$, gemessen jeweils an einem Substrat mit erfindungsgemäßer Verschleißschutzschicht und einem Substrat ohne Verschleißschutzschicht, bereits als farbneutral im Sinne der Erfindung angesehen.

In einer bevorzugten Ausführungsform kann die erfindungsgemäße Verschleißschutzschicht über ein vergleichsweise hohes E-Modul verfügen. Dieses ist in der Richtung parallel zur Substratoberfläche am größten. Ein hohes E-Modul ist insofern von Vorteil, als ein höheres E-Modul zu einer besseren bzw. höheren Temperaturbeständigkeit der Verschleißschutzschicht beitragen kann, wenn diese auf einem Substrat aufgebracht ist, welches wiederholt höheren Temperaturen ausgesetzt ist.

Dies ist dem Umstand geschuldet, dass das E-Modul mit zunehmender Temperatur etwas abnimmt. Überraschenderweise führt ein höheres E-Modul dagegen dazu, dass auch bei höherer Temperatur immer noch ein hinreichend hohes E-Modul vorliegt, auch wenn dieses etwas abnimmt.

Die erfindungsgemäße Verschleißschutzschicht weist dabei ein E-Modul auf, welches wenigstens 100 GPa, bevorzugt wenigstens 250 GPa und besonders bevorzugt wenigstens 300 GPa beträgt. In weiteren bevorzugten Ausführungsformen beträgt das E-Modul wenigstens 320 GPa, wenigstens 350 GPa oder wenigstens 370 GPa oder sogar wenigstens 400 GPa. Dabei beträgt das E-Modul der erfindungsgemäßen Verschleißschutzschicht nicht mehr als 700 GPa, bevorzugt nicht mehr als 680 GPa und besonders bevorzugt nicht mehr als 650 GPa.

Eine hohe Steifigkeit der Verschleißschutzschicht kann bei Temperaturbelastungen von Vorteil sein, gerade wenn das Substrat über einen geringen Ausdehnungskoeffizienten verfügt. Die erfindungsgemäße Verschleißschutzschicht kann daher auch besonders vorteilhaft bei Substraten zum Einsatz kommen, welche einen geringen Wärmeausdehnungskoeffizienten aufweisen, wie es beispielsweise bei Glaskeramiken der Fall ist.

Für die Erfindung können Substrate umfassend semitransparente, transparente oder transluzente, farblose oder volumengefärbte Gläser oder Glaskeramiken verwendet werden.

Unter einem Glas wird hierbei ein Material verstanden, welches durch einen Schmelzprozess hergestellt wird und eine röntgenamorphe Struktur aufweist.

Unter dem Begriff Glaskeramik sind Werkstoffe zu verstehen, die durch eine gesteuerte Kristallisation aus einer Glasschmelze hergestellt werden können, wobei zunächst ein keramisierbares Glas oder Grünglas hergestellt wird, welches durch eine anschließende Keramisierung zu einer Glaskeramik umgewandelt wird.

Unter volumengefärbt werden Färbungen im sichtbaren Spektralbereich von 380 bis 780 nm verstanden. Volumenfärbungen können hierbei durch färbende Metallionen erreicht werden, wobei die farbgebenden Ionen im Grünglas oder in der Glaskeramik gelöst sind. Sofern das Element ein keramisierbares Grünglas umfasst, kann dieses nach dem Beaufschlagen mit elektromagnetischer Strahlung zur Veränderung der optischen Eigenschaften durch einen Keramisierungsprozess in eine Glaskeramik überführt werden.

Als Substrate können allgemein Gläser, bevorzugt Borosilikatgläser, Aluminosilikatgläser, Kalk-Natrongläser, synthetische Quarzgläser (sogenannte "fused silica"-Gläser), Lithiumaluminosilikatgläser oder optische Gläser verwendet werden. Auch Kristalle für optische Anwendungen wie z.B. Saphir oder Kaliumfluoridkristalle können als Substrat verwendet werden. Desweiteren können Glaskeramiken, bevorzugt Lithium-Aluminosilikat-Glaskeramiken, eingesetzt werden.

Bevorzugt werden Gläser und Glaskeramiken mit einer niedrigen thermischen Ausdehnung verwendet, da dies die Temperaturwechselbeständigkeit erhöht. Für Gläser liegt der thermische Ausdehnungskoeffizient $\alpha_{20-300}$ deshalb vorzugsweise im Bereich im $2*10^{-6}$ K$^{-1}$ bis $7*10^{-6}$ K$^{-1}$, bevorzugt im Bereich im $2{,}5*10^{-6}$ K$^{-1}$ bis $5*10^{-6}$ K$^{-1}$, besonders bevorzugt im Bereich im Bereich im $3*10^{-6}$ K$^{-1}$ bis $4{,}5*10^{-6}$ K$^{-1}$. Substrate mit solchen Gläsern sind insbesondere für Kochgeräte mit Induktionsheizelementen geeignet.

In einer weiteren bevorzugten Ausführungsform handelt es sich bei dem Substrat um eine Glaskeramik, insbesondere um eine Glaskeramik mit einem thermischen Ausdehnungskoeffizienten $\alpha_{20-700}$ im Bereich $-1*10^{-6}$ K$^{-1}$ bis $2{,}5*10^{-6}$ K$^{-1}$, vorzugsweise im Bereich $-0{,}5*10^{-6}$ K$^{-1}$ bis $2{,}2*10^{-6}$ K$^{-1}$, besonders bevorzugt im Bereich $-0*10^{-6}$ K$^{-1}$ bis $2{,}0*10^{-6}$ K$^{-1}$. Für Kochgeräte mit Induktionsheizelementen werden Substrate mit einer Glaskeramik mit einem thermischen Ausdehnungskoeffizienten $\alpha_{20-700}$ im Bereich $1{,}5*10^{-6}$ K$^{-1}$ bis $2{,}5*10^{-6}$ K$^{-1}$, vorzugsweise im Bereich $1{,}7*10^{-6}$ K$^{-1}$ bis $2{,}2*10^{-6}$ K$^{-1}$, oder sogar im Bereich $1{,}8*10^{-6}$ K$^{-1}$ bis $2{,}1*10^{-6}$ K$^{-1}$ besonders bevorzugt. Dies ist beispielsweise bei auf dem LAS-System (Lithium-Aluminosilikat-Glaskeramik) basierenden Glaskeramiken der Fall. Selbstverständlich können auch andere Glaskeramiken, etwa auf dem MAS-System (Magnesium-Aluminosilikat-Glaskeramik) basierend, verwendet werden.

Der thermische Ausdehnungskoeffizient kann gemäß ISO 7991 bestimmt werden.

Ein geringer thermischer Ausdehnungskoeffizient CTE ermöglicht es, dass eine gute Temperaturbeständigkeit des beschichteten Substrates erreicht werden kann. Je höher der Betrag des Ausdehnungskoeffizienten des Glases oder der Glaskeramik ist, desto höher ist das Risiko von spannungsinduzierten Brüchen der Verschleißschutzschicht.

Dem kann entgegengewirkt werden, in dem das Glas oder die Glaskeramik thermisch oder chemisch vorgespannt wird. Durch eine solche Vorspannung entsteht an der Oberfläche des Glases eine Druckspannung, die der thermischen Spannung entgegenwirkt.

Entsprechende Glaskeramiken können beispielsweise als Kochflächen verwendet werden. Da die erfindungsgemäße Verschleißschutzschicht zudem gegenüber Temperaturen von zumindest 300 °C, bevorzugt von zumindest 400 °C und darüber dauerhaft temperaturstabil ist, kann die Beschichtung auch problemlos auf den Heißzonen des Kochfeldes aufgebracht werden.

Die erfindungsgemäße Verschleißschutzschicht zeichnet sich weiterhin durch eine große Härte aus. Die Härte, gemessen nach DIN EN ISO 14577 (Martens-Härte) bei einer Prüfkraft von 10 mN, beispielsweise mit einem Berkovich-Eindringkörper, beträgt dabei vorzugsweise wenigstens 5 GPa, bevorzugt wenigstens 7 GPa, besonders bevorzugt 9 GPa oder sogar 11 GPa oder darüber hinaus. Als harte Verschleißschutzschicht im Sinne der Erfindung wird insbesondere eine Verschleißschutzschicht angenommen, welche die vorstehend genannte Härte aufweist, also wenigstens eine Härte von 5 GPa, bevorzugt wenigstens 7 GPa, besonders bevorzugt 9 GPa oder sogar 11 GPa oder darüber hinaus. Die Martens-Härte einer unbehandelten Glaskeramik-Oberfläche liegt im Vergleich hierzu bei etwa 3 bis 4 GPa und damit deutlich niedriger als bei der erfindungsgemäßen Verschleißschutzschicht.

Dies ist insofern günstig, da die Kratzfestigkeit einer Beschichtung neben der Härte auch davon abhängt, wie gut die Beschichtung auf dem Substrat haftet. Zeigen Beschichtung und Substrat zudem unterschiedliche thermische Ausdehnungskoeffizienten, so kann dies zum Aufbau von Spannungen in der Beschichtung und zu Rissen oder sogar zu einem Abplatzen der Beschichtung führen.

Bei Beschichtungen mit einem E-Modul wie oben dargestellt können dabei die auftretenden Spannungen besser abgefangen werden, so dass die Beschichtung besser auf dem Substrat haftet.

Die vergleichbaren Werte für das E-Modul eines Substrates aus Glas oder Glaskeramik, welches keine erfindungsgemäße Verschleißschutzschicht umfasst, liegen bei etwa 40 bis 90 GPa, wobei Glaskeramik beispielsweise eine Martenshärte von etwa 3 bis 4 GPa aufweist. Hierin zeigen sich die hervorragenden mechanischen Eigenschaften der Verschleißschutzschicht.

Die Erfinder haben herausgefunden, dass eine sehr gute Haftung der erfindungsgemäßen Verschleißschutzschicht auf dem Substrat zur Verfügung gestellt werden kann, wenn die intrinsische Schichtspannung, vorzugsweise die Druckspannung, in einem bestimmten Bereich liegt. Dies wird durch das Zusammenwirken der Schichtspannung mit dem vorstehend genannten hohen E-Modul weiter verbessert.

Dabei sollte die intrinsische Schichtspannung der Verschleißschutzschicht nicht zu hoch sein, da es sonst bei thermischer Belastung zu Abplatzungen der Verschleißschutzschicht kommen kann. Es wurde beobachtet, dass diese Gefahr bei Schichtspannungen von mehr als 1500 MPa vermehrt auftritt. Andererseits führt eine zu niedrige intrinsische Schichtspannung dazu, dass die Härte insgesamt nicht gut ist. So wurde festgestellt, dass intrinsische Schichtspannungen unter etwa 500 MPa, wie sie typischerweise bei einem ionenstrahlbasiertem Sputtern erreicht werden, zu niedrig sein können.

Erfindungsgemäß konnte eine besonders gute Haftung erreicht werden, wenn die intrinsische Schichtspannung der Verschleißschutzschicht, vorzugsweise die Druckspannung, mehr als 500 MPa und weniger als 1500 MPa, vorzugsweise mehr als 525 MPa und/oder nicht mehr als 1000 MPa, besonders bevorzugt mehr als 550 MPa und/oder nicht mehr als 750 MPa beträgt. Dies bietet zudem den großen Vorteil, dass auch Sputterverfahren mit hoher Abscheiderate, zum Beispiel das Magnetronsputtern, verwendet werden können, um die Verschleißschutzschicht aufzubringen. Dies ist insofern günstig, als dass derartige Verfahren vergleichsweise wirtschaftlicher zu betreiben sind.

Die Oberfläche der erfindungsgemäßen Verschleißschutzschicht kann dabei chemisch inert sein gegenüber zumindest einer, vorzugsweise allen, der nachfolgend aufgeführten Substanzen Wasser, Reinigungsmitteln wie Essig- und Zitronensäure sowie anderen Substanzen, wie sie bei der Nahrungsmittelzubereitung verwendet werden, insbesondere Salzwasser. Im Sinne der Erfindung wird hierunter verstanden, dass die Verschleißschutzschicht in Kontakt mit potentiellen Reaktionspartnern, also beispielsweise mit Luft, Reinigungsmitteln oder anderen Substanzen wie etwa Salzwasser, nicht oder nur in verschwindend geringem Maße reagiert, ähnlich beispielsweise einer Oberfläche aus Glas.

Damit bleibt in besonders günstiger Weise auch die hohe Transparenz der Verschleißschutzschicht, auch bei Angriffen mit derartigen Substanzen, erhalten. Nachgewiesen werden kann dieses beispielsweise in einem Vergleich, bei dem der Lichttransmissionsgrad im sichtbaren Wellenlängenspektrum einer Verschleißschutzschicht, welche über einen bestimmten Zeitraum, beispielsweise über 24 Stunden, einer Belastung mit einem potentiellen Reaktionspartner ausgesetzt wird, mit dem Lichttransmissionsgrad im sichtbaren Wellenlängenspektrum einer gleichen Verschleißschutzschicht, welche nicht einem potentiellen Reaktionspartner ausgesetzt wird, verglichen wird.

Die Einwirkung des potentiellen Reaktionspartners, also z.B. Essig- oder Zitronensäure, kann bei Raumtemperatur erfolgen, wobei ein Tropfen Flüssigkeit auf die Verschleißschutzschicht aufpipettiert werden kann und z.B. für den vorgesehenen Zeitraum, beispielsweise über 24 Stunden, abgedeckt wird.

Erfindungsgemäß soll die Verschleißschutzschicht als chemisch inert gelten, wenn die Abweichung im Lichttransmissionsgrad im sichtbaren Wellenlängenspektrum weniger als 2 % bzw. 2 Prozentpunkte beträgt, bevorzugt weniger als 1 Prozentpunkt und besonders bevorzugt weniger als 0,5 Prozentpunkte. In anderen Worten, ein Lichttransmissionsgrad im sichtbaren Wellenlängenspektrum einer Verschleißschutzschicht von beispielsweise 85 % weist nach Einwirken einer derartigen Substanz immer noch einen Lichttransmissionsgrad im sichtbaren Wellenlängenspektrum von wenigstens 83 %, bevorzugt wenigstens 84 % und besonders bevorzugt wenigstens 84,5 % auf.

Gemäß einer weiteren bevorzugten Ausführungsform ist die Oberfläche der Verschleißschutzschicht und besonders bevorzugt die Verschleißschutzschicht vollständig frei von gesundheitsgefährdenden Stoffen. Dies betrifft insbesondere Materialien umfassend Arsen, Antimon, Blei, Quecksilber, Cadmium, sechswertiges Chrom oder Wismuth, aber auch Weichmacher (Phthalate) oder flüchtige organische Komponenten (VOCs). In einer besonders bevorzugten Ausführungsform ist die Verschleißschutzschicht demnach bis auf unvermeidbare Spuren frei von Arsen, Antimon, Blei, Quecksilber, Cadmium, sechswertiges Chrom oder Wismuth, sowie Weichmachern (Phthalate) und flüchtigen organischen Komponenten (VOCs).

Dies ist von großem Vorteil, wenn die Verschleißschutzschicht beispielsweise auf Kochflächen oder Kochgeschirr aus Glas oder Glaskeramik aufgebracht werden soll, und wobei die Verschleißschutzschicht in einen direkten Kontakt mit den zuzubereitenden Nahrungsmitteln kommen kann. Auf diese Weise können gesundheitliche Beeinträchtigungen und Gefahren durch unerwünschte Reaktionen oder Diffusionsprozesse im Kontaktbereich zwischen Verschleißschutzschicht und Nahrungsmittel verhindert werden.

Aufgrund der Schichteigenschaften der Verschleißschutzschicht, insbesondere der großen Härte sowie der hohen Schichtspannung, ist bereits eine Schichtdicke von nur 500 nm, bevorzugt wenigstens 800 nm, besonders bevorzugt wenigstens 1.000 nm ausreichend, um den erfindungsgemäßen mechanischen Schutz zu erzielen und damit das Substrat vor mechanischen Belastungen, Verschleiß und Kratzern zu schützen. Technisch sind auch dünnere Verschleißschutzschichten, etwa bis hin zu 100 nm oder sogar nur 50 nm realisierbar. Allerdings kann in diesem Fällen die mechanische Schutzfunktion beeinträchtigt werden. Dickere Schichten bis 5.000 nm, bevorzugt weniger als 3.500 nm, und besonders bevorzugt weniger als 2.000 nm, sind ebenfalls möglich, welche einen besseren Schutz vor mechanischen Einwirkungen bieten und damit eine längere Haltbarkeit und, etwa im Fall von Kochflächen, eine edle Anmutung der Kochfläche auch nach vielen Jahren des Gebrauchs. Allerdings sind hier die Verfahrenszeiten zum Erzeugen der Verschleißschutzschicht länger und der Materialeinsatz ist höher.

Die erfindungsgemäße Verschleißschutzschicht ist zudem, wie bereits ausgeführt, gegenüber Temperaturen von zumindest 350 °C, bevorzugt von zumindest 400 °C und besonders bevorzugt von zumindest 500 °C dauerhaft stabil bzw. temperaturstabil und ermöglicht es damit, auch bei diesen höheren Temperaturbelastungen verwendet werden zu können, ohne dass es zu Einbußen bei der Transparenz oder anderen optischen Eigenschaften der Verschleißschutzschicht kommt.

Unter dem Begriff "temperaturstabil" ist im Sinne der Erfindung zu verstehen, dass die Verschleißschutzschicht bei einer Haltezeit von 30 Minuten über eine Anzahl von wenigstens 100 Zyklen, vorzugsweise von wenigstens 1.000 Zyklen, keine nennenswerten Änderungen in ihrem Lichttransmissionsgrad im sichtbaren Wellenlängenbereich und/oder in anderen optischen Eigenschaften aufweist.

Ein Zyklus kann dabei die Erhitzung des Substrates mit der Verschleißschutzschicht von Raumtemperatur auf die besagte Temperatur, also 350 °C, bevorzugt zumindest 400 °C und besonders bevorzugt zumindest 500 °C, mit einem Temperaturanstieg von vorzugsweise zwischen 1 °C bis 50 °C pro Minute bis zu der vorgesehenen Temperatur umfassen, gefolgt von einer Haltezeit von 30 Minuten, und einem Abkühlen auf Raumtemperatur.

Nach der vorgesehenen Anzahl an Zyklen wird die Verschleißschutzschicht mit einer Verschleißschutzschicht verglichen, welche nicht diesen Temperaturzyklen unterworfen wurde. Als temperaturstabil im Sinne der Erfindung gilt dann eine Verschleißschutzschicht, wenn die Abweichung im Lichttransmissionsgrad im sichtbaren Wellenlängenspektrum weniger als 4 Prozentpunkte beträgt, bevorzugt weniger als 2 Prozentpunkte und besonders bevorzugt weniger als 1 Prozentpunkt beträgt. Die Prozentangaben sind dabei als absolute Unterschiede zu verstehen. So entspricht eine Änderung von 2 Prozentpunkten beispielsweise einer Änderung von 80 % auf 78 %.

Die Erfinder haben herausgefunden, dass die Verschleißschutzschicht mehrere Teilschichten oder Lagen aufweisen kann, umfassend wenigstens zwei, bevorzugt wenigstens drei, besonders bevorzugt mehr als drei Teilschichten. Diese Teilschichten oder Lagen sind vorzugsweise überlappend oder deckend aufeinander aufbauend aufgetragen, weisen vorzugsweise die gleiche chemische Zusammensetzung und Morphologie auf und können gemeinsam die Verschleißschutzschicht ausbilden.

Die Verschleißschutzschicht ist in einer bevorzugten Ausführungsform vollständig oder im Wesentlichen amorph ausgebildet, was bedeutet, dass sich in elektronenmikroskopischen Aufnahmen keine erkennbare Struktur zeigt. In anderen Worten, im RöntgenBeugungsspektrum treten keine scharfen Interferenzlinien auf, die sich deutlich hervorheben. Allenfalls nanokristalline Phasen oder Entmischungen existieren in der Verschleißschutzschicht, wobei der kristalline Anteil der Verschleißschutzschicht zwischen 0,001 Gew.-% bis höchstens 2 Gew.-% beträgt.

Die eventuell vorhandenen Kristallite weisen dabei eine mittlere Kristallgröße von vorzugsweise höchstens 5 nm auf, bevorzugt 4 nm oder weniger, da durch größere Kristallite Streueffekte hervorgerufen werden können, welche sich ungünstig auf den Lichttransmissionsgrad auswirken können.

Die Verschleißschutzschicht ist in einer weiteren bevorzugten Ausführungsform vollständig oder im Wesentlichen kristallin ausgebildet, was bedeutet, dass sich in elektronenmikroskopischen Aufnahmen eine erkennbare Struktur zeigt. In anderen Worten, im RöntgenBeugungsspektrum treten scharfe Interferenzlinien auf, die sich deutlich hervorheben.

Die Kristallgröße kann beispielsweise mittels Elektronenmikroskopie, insbesondere mittels Transmissionselektronenmikroskopie, bestimmt werden. Die Kristallinität kann beispielsweise mittels Röntgenbeugung oder Elektronenmikroskopie bestimmt werden.

Die erfindungsgemäße Verschleißschutzschicht ist oder umfasst vorzugsweise zumindest eine Hartstoffschicht auf Basis von wenigstens einem der folgenden Bestandteile: Aluminiumoxid, Siliziumzirkonoxid, Zirkonoxid, Siliziumnitrid, Siliziumzirkonnitrid, Siliziumaluminiumnitrid, Aluminiumnitrid, Siliziumoxinitrid, Siliziumzirkonoxinitrid, Siliziumaluminiumoxinitrid, Aluminiumoxinitrid.

Die vorstehend genannten Schichten können als reine Schichten vorliegen. Sie können aber auch weitere Bestandteile, beispielsweise ein oder mehrere weitere Nitride, Oxide, Carbonitride, Oxicarbide und/oder Oxinitride enthalten, wobei es sich bevorzugt um die entsprechenden Verbindungen der Elemente Aluminium, Silizium, Bor, Zirkon, Titan, Nickel, Chrom, Wolfram, Magnesium, Molybdän, Zink oder Mangan handelt. Die erfindungsgemäße Verschleißschutzschicht kann wenigstens eines der chemischen Elemente O, N, C, Al, Si, Mg umfassen. Diese weiteren Bestandteile können beispielsweise in einem Anteil von 0,001 Gew.-% bis 20 Gew.-%, vorzugsweise 0,01 Gew.-% bis 10 Gew.-%, besonders bevorzugt 0,1 Gew-% bis 1 Gew.-% vorliegen.

Hierdurch können bestimmte Eigenschaften der Verschleißschutzschicht wie beispielsweise Härte, Schichtspannung, E-Modul oder die Widerstandsfähigkeit gegen Abrieb, beispielsweise die Polierresistenz, weiter modifiziert werden.

Gemäß einer weiteren Ausführungsform der Erfindung kann die Beschichtung neben der Verschleißschutzschicht weitere Schichten umfassen. In einer Weiterbildung der Erfindung kann daher zwischen der Oberfläche des Substrates und der Verschleißschutzschicht zumindest eine weitere Schicht aufgebracht sein, welche reine Metalle oder Legierungen oder Nitride, Oxide, Carbide, Oxicarbide, Carbonitride und/oder Oxinitride umfassen kann, ausgewählt aus der Gruppe der Elemente Aluminium, Silizium, Bor, Zirkon, Titan, Nickel, Chrom, Magnesium, Molybdän, Zink, Mangan oder Kohlenstoff.

Diese weitere Schicht kann beispielsweise eine optische Anpassschicht umfassen, um den Brechungsindex zwischen Substrat und Verschleißschutzschicht anzupassen.

Die weitere Schicht kann auch eine Diffusionsbarriereschicht umfassen oder als Diffusionsbarriereschicht ausgebildet sein, um Diffusionsprozesse zwischen Substrat und Verschleißschutzschicht zu reduzieren oder zu vermeiden.

Die weitere Schicht kann auch eine Haftvermittlerschicht umfassen. Diese kann zwischen dem Substrat und der Verschleißschutzschicht angeordnet sein und verbessert die Anhaftung der Verschleißschutzschicht auf dem Substrat. Dies ist insbesondere dann vorteilhaft, wenn die thermischen Ausdehnungskoeffizienten von Substrat und Verschleißschutzschicht sich deutlich unterscheiden. Als besonders vorteilhaft haben sich hierbei solche Haftvermittlerschichten herausgestellt, die aus reinen Metallen, Legierungen oder Nitriden, Oxiden, Carbiden, Carbonitriden und/oder Oxinitriden der Elemente Aluminium, Silizium, Bor, Zirkon, Titan, Nickel, Chrom und/oder Kohlenstoff gebildet werden.

Die Haftvermittlerschicht kann hierbei auftretende Spannungen reduzieren, zumindest führt sie zu einer starken chemischen Anbindung an das Substrat. Eine entsprechende enge Anpassung der thermischen Ausdehnungskoeffizienten von Substrat und Verschleißschutzschicht ist daher nicht notwendig. Dies ermöglicht eine breite Auswahl an geeigneten Substratmaterialien. Die Abscheidung kann beispielsweise über PVD, CVD oder Sol-Gel-Verfahren erfolgen.

Von Vorteil sind diese Schichten, umfassend die optische Anpassschicht, die Diffusionsbarriereschicht und/oder die Haftvermittlerschicht, derart ausgebildet, dass sie über einen Lichttransmissionsgrad im sichtbaren Wellenlängenspektrum zwischen 380 nm und 780 nm verfügen, welcher demjenigen der erfindungsgemäßen Verschleißschutzschicht angenähert ist. Vorzugsweise weicht daher der Lichttransmissionsgrad im sichtbaren Wellenlängenspektrum dieser Schicht, umfassend die optische Anpassschicht, die Diffusionsbarriereschicht und/oder die Haftvermittlerschicht, von dem Lichttransmissionsgrad im sichtbaren Wellenlängenspektrum der Verschleißschutzschicht um nicht mehr als 2 Prozentpunkte, bevorzugt um nicht mehr als 1 Prozentpunkte und besonders bevorzugt um nicht mehr als 0,5 Prozentpunkte ab.

Gemäß einer weiteren Ausführungsform der Erfindung kann beispielsweise eine Deckschicht vorgesehen sein, welche oberhalb der Verschleißschutzschicht angeordnet ist. Die Bezeichnung oberhalb bezieht sich auf den Aufbau der Beschichtung ausgehend vom Substrat, d.h. die Verschleißschutzschicht ist somit zwischen dem Substrat und der Deckschicht angeordnet. Durch das Aufbringen einer Deckschicht auf die Verschleißschutzschicht können einzelne Eigenschaften wie z.B. das optische Erscheinungsbild oder die Poliereigenschaften gegenüber einem bestimmten Poliermedium modifiziert werden.

Eine Ausführungsform der Erfindung sieht vor, dass die Deckschicht durch Nitride, Oxide, Carbide, Carbonitride und/oder Oxinitride ausgewählt aus der Gruppe der Elemente Aluminium, Silizium, Bor, Zirkon, Titan, Nickel oder Kohlenstoff gebildet wird. Die Deckschicht kann als eine Mischschicht mehrerer der oben genannten Verbindungen oder als eine Schicht einer Verbindung ausgebildet sein. Bevorzugt wird die Deckschicht durch Sputtern aufgebracht. Alternativ können auch CVD oder Sol Gel Technologien eingesetzt werden. Bei der Deckschicht kann es sich beispielsweise um eine $SiO_x$-haltige Schicht handeln. Es ist auch möglich, abhängig von Brechungsindex und Schichtdicke der Deckschicht, den Farbort der Reflexionsfarbe und/oder die Reflexionseigenschaften der darunterliegenden Verschleißschutzschicht zu verändern.

In einer bevorzugten Ausführungsform kann auf der Verschleißschutzschicht eine Deckschicht aufgebracht sein, deren Sauerstoffgehalt unterschiedlich ist im Vergleich zu demjenigen der Verschleißschutzschicht. Von Vorteil ist der Sauerstoffgehalt der Deckschicht im Mittel höher als in der Mitte der Dicke der Verschleißschutzschicht bzw. in einem mittleren Bereich zwischen den beiden gegenüberliegenden Oberflächen der Verschleißschutzschicht im Mittel. Die Deckschicht mit erhöhtem Sauerstoffgehalt kann ebenfalls durch Sputtern aufgebracht werden.

In einer alternativen Ausführungsform kann die Verschleißschutzschicht bevorzugt einen Bereich umfassen, bevorzugt an der dem Substrat gegenüberliegenden Oberfläche, dessen Sauerstoffgehalt höher ist als in der Mitte der Dicke der Verschleißschutzschicht bzw. in einem mittleren Bereich zwischen den beiden gegenüberliegenden Oberflächen der Verschleißschutzschicht. Dieser Bereich kann von der Oberfläche der Verschleißschutzschicht aus gemessen bis zu einer Tiefe von etwa 100 nm in die Verschleißschutzschicht hineinragen, bevorzugt bis zu einer Tiefe von 50 nm und besonders bevorzugt von bis zu 30 nm. Dabei sollte dieser Bereich wenigstens 10 nm dick sein.

Der Bereich der Verschleißschutzschicht mit erhöhtem Sauerstoffgehalt kann beispielsweise durch eine Wärmebehandlung und/oder eine chemische Behandlung, z.B. eine Säurebehandlung, in der Verschleißschutzschicht gebildet werden, bevorzugt auf der Außenseite der Verschleißschutzschicht.

Die besondere Deckschicht mit erhöhtem Sauerstoffgehalt oder der Bereich der Verschleißschutzschicht mit erhöhtem Sauerstoffgehalt kann in einer bevorzugten Ausführungsform als eine Mischschicht mehrerer der oben genannten Verbindungen oder als eine Schicht einer Verbindung ausgebildet sein.

Der so gebildete Bereich mit erhöhtem Sauerstoffgehalt innerhalb der Verschleißschutzschicht kann über einen Gradienten in die eigentliche Verschleißschutzschicht übergehen. In anderen Worten, der Sauerstoffgehalt der Verschleißschutzschicht kann ausgehend von dem Sauerstoffgehalt im mittleren Bereich zwischen den beiden gegenüberliegenden Oberflächen der Verschleißschutzschicht zu der dem Substrat abgewandten Oberfläche hin zunehmen zu dem gewünschten erhöhten Wert des Sauerstoffgehalts, wobei diese Zunahme linear verlaufen kann.

Durch diese Deckschicht oder diesen Bereich mit erhöhtem Sauerstoffgehalt kann die Resistenz der Verschleißschutzschicht gegenüber Säuren und/oder die Verschleißresistenz nochmals weiter erhöht werden.

Es konnten bereits gute Ergebnisse erzielt werden, wenn der Sauerstoffgehalt dabei um wenigstens 5 %, bevorzugt wenigstens 10 % erhöht ist.

In einer weiteren Ausführungsform kann die Verschleißschutzschicht eine kohlenstoffhaltige Deckschicht aufweisen. Der Kohlenstoffgehalt der Deckschicht führt dabei zu einer Verringerung des Reibwertes, was insbesondere bei beschichteten Substraten, die als Kochfläche verwendet werden, vorteilhaft ist, da sich so die Töpfe leichter auf der Kochfläche verschieben lassen. Des Weiteren können die Poliereigenschaften und die Resistenz der Beschichtung gegenüber Poliermedien verbessert werden. Die Deckschicht kann beispielsweise Carbide und/oder Graphit enthalten.

Von Vorteil ist auch diese Schicht, umfassend die Deckschicht, derart ausgebildet, dass sie über einen Lichttransmissionsgrad im sichtbaren Wellenlängenspektrum zwischen 380 nm und 780 nm verfügt, welcher demjenigen der erfindungsgemäßen Verschleißschutzschicht angenähert ist. Vorzugsweise weicht daher der Lichttransmissionsgrad im sichtbaren Wellenlängenspektrum dieser Schicht, umfassend die Deckschicht, von dem Lichttransmissionsgrad im sichtbaren Wellenlängenspektrum der Verschleißschutzschicht um nicht mehr als 2 Prozentpunkte, bevorzugt um nicht mehr als 1 Prozentpunkt und besonders bevorzugt um nicht mehr als 0,5 Prozentpunkte ab.

Unbenommen hiervon sind selbstverständlich Deckschichten, welcher der Dekoration dienen, und beispielsweise über Strukturen verfügen, welche optisch erkennbar sein sollen. Der Lichttransmissionsgrad dieser Dekorschichten richtet sich vorzugsweise nach dem gewünschten optischen Effekt, welcher erzielt werden soll.

In einer weiteren Ausführungsform der Erfindung kann die Verschleißschutzschicht zumindest einen Bereich umfassen, welcher nicht elektrisch leitfähig bei Raumtemperatur ist. Hierunter wird im Sinne der Erfindung verstanden, dass die Verschleißschutzschicht einen Flächenwiderstand von wenigstens 1 kΩ/square, bevorzugt wenigstens 0,5 MΩ/square und besonders bevorzugt wenigstens 2 MΩ/square, vorzugsweise gemessen mit einer Vierpunktmessung, aufweist. Ein derart hoher Flächenwiderstand ermöglicht es, insbesondere kapazitive Berührungssensoren unterhalb des Substrates mit der Verschleißschutzschicht anzuordnen, deren Verwendung bei einer höheren Leitfähigkeit der Beschichtung aufgrund parasitärer Kapazitäten nicht oder nur mit erheblich reduzierter Empfindlichkeit möglich wäre.

Auch der Einsatz von Induktionsspulen unterhalb des Substrates mit der Verschleißschutzschicht wird hierdurch ermöglicht, da das von solchen Spulen erzeugte Wechselmagnetfeld bei einem entsprechend hohen elektrischen Widerstand der Verschleißschutzschicht nicht durch die Beschichtung gedämpft oder gestreut wird.

Eine Streuung von Magnetwechselfeldern findet beispielsweise bei Schichten mit einem Widerstand von weniger als 1 kΩ/square und einer Schichtdicke, die geringer ist als die Eindringtiefe des Magnetfeldes, statt und führt zu einer schlechten elektromagnetischen Verträglichkeit des Gesamtsystems. Induktionsspulen können beispielsweise als Heizelemente oder zur kabellosen Energieübertragung vorgesehen sein.

In einer weiteren Ausführungsform der Erfindung kann die Oberfläche der Verschleißschutzschicht, zumindest in Abschnitten, eine strukturierte Oberfläche z.B. eine Mottenaugenstruktur umfassen. Hierunter ist zu verstehen, dass die Oberfläche der Verschleißschutzschicht Mikro- und/oder Nanostrukturen umfasst, vorzugsweise kegel- oder pyramidenförmige Nanostrukturen. Diese können beispielsweise mittels Ätzen, Plasmaverfahren wie PECVD ("PECVD" = Plasmaunterstützte chemische Gasphasenabscheidung) oder Elektronenstrahl-Lithographie erzeugt werden. Dies unterstützt die Reduzierung von unerwünschten Reflektionen an der Oberfläche.

Auf Grund der hohen Temperaturstabilität kann die Verschleißschutzschicht bzw. ein entsprechend beschichtetes Substrat in unterschiedlichen Heißbereichen, beispielsweise im Fall einer Glaskeramik als Kochfläche oder im Fall einer Glasscheibe als Ofensichtscheibe, verwendet werden. Weitere Anwendungsmöglichkeiten der erfindungsgemäßen Verschleißschutzschicht oder eines damit beschichteten Substrates können allgemein mechanisch belastete Glasoberflächen mit oder ohne Temperaturbelastung sein, bei denen eine dauerhaft hohe Transmission wichtig ist.

Der hohe Lichttransmissionsgrad im sichtbaren Wellenlängenspektrum der erfindungsgemäßen Verschleißschutzschicht bietet den großen Vorteil, dass die Verschleißschutzschicht im Wesentlichen nicht für das menschliche Auge sichtbar ist, und damit die Oberfläche des darunterliegenden Substrates oder, im Falle eines ebenfalls transparenten Substrates, sich darunter befindliche Gegenstände oder Drucke für das menschliche Auge sichtbar bleiben.

Insbesondere bei Kochflächen wird häufig ein Dekor auf die Glaskeramikoberfläche aufgedruckt. Eine Weiterbildung der Erfindung kann daher vorsehen, dass das Substrat zumindest teilweise mit einer Dekorschicht versehen wird. Die Dekorschicht kann dabei auf der Ober- oder Unterseite des Substrates ausgebildet sein.

Die erfindungsgemäße Verschleißschutzschicht bzw. ein mit der erfindungsgemäßen Verschleißschutzschicht versehenes Substrat kann auf vielen weiteren technischen Gebieten verwendet werden, bei denen die Oberfläche einer mechanischen Beanspruchung ausgesetzt ist und/oder eine hohe Transparenz gefordert ist.

Selbstverständlich ist es hierzu möglich, die gesamte Oberfläche des Substrates vollständig mit der erfindungsgemäßen Verschleißschutzschicht zu versehen und damit die relevante Oberfläche vollflächig zu beschichten, oder nur diejenigen Teilbereiche der Oberfläche des Substrates, welche mechanischen Beanspruchungen ausgesetzt sind.

Das mit der erfindungsgemäßen Verschleißschutzschicht beschichtete Substrat kann damit insbesondere als optisches Bauteil, als Kochfläche, als Heizplatte, als Warmhalteplatte, als Glas- oder Glaskeramikarbeitsplatte, für Glas- oder Glaskeramikbauteile in Haushaltsgeräten, als Ofensichtscheibe, als Kaminsichtscheibe, als Backofensichtscheibe, für Kühlschrank- und Küchenfronten, als Sichtscheibe im Fahrzeugbereich, für Uhrengläser, für Brillen, etwa VR- oder AR-Brillen, oder als Display beispielsweise für Tablet-PCs oder Mobiltelefone, insbesondere auch als Touchdisplay, verwendet werden.

Weitere Beispiele sind Fahrzeugverglasungen, etwa für den Einsatz in sandigen Gebieten. Hier erblinden Scheiben durch Abrasion sehr leicht, dies sogar im Fahrzeugstillstand durch den vom Wind mitgeführten Sand, sowie durch Verwenden der Scheibenwischer bei mit Sand belegten Frontscheiben.

Andere Anwendungen sind z. B. der Schutz von Scannerkassen-Verglasungen. Hier wird der Barcode von Produkten eingescannt, während diese über eine Glasscheibe gezogen werden. Transparente Kratzschutzschichten führen in diesen Anwendungen zu Lebensdauer-Erhöhungen und Kosteneinsparungen aufgrund höherer Standzeiten.

Die Verschleißschutzschicht bzw. das erfindungsgemäß beschichtete Substrat kann dabei insbesondere mit einem Verfahren hergestellt werden, dass zumindest die folgenden Schritte umfasst:

a) Bereitstellen eines Substrates in einer Sputtervorrichtung mit einem Target

b) Abgabe von gesputterten Partikeln aus dem Target mit einer Leistung im Bereich von 8 bis 1000 W/cm$^2$, bevorzugt 10 - 100 W/cm$^2$ pro Targetfläche.

Vor Abgabe der gesputterten Partikel in Schritt b) erfolgt dabei eine Evakuierung der Sputtervorrichtung auf einen niedrigen Enddruck. So liegt der Enddruck in der Beschichtungsanlage, d.h. der Druck, ab dem ein Beschichtungsvorgang gestartet werden kann, bei höchstens 2*10$^{-5}$ mbar, bevorzugt sogar bei Drücken im Bereich von 1*10$^{-6}$ bis 5*10$^{-6}$ mbar oder weniger. Durch die geringen Enddrücke wird die Fremdgasmenge, beispielsweise der Gehalt an Wasserdampf oder volatilen organischen Komponenten (VOCs), minimiert, d.h. der Beschichtungsprozess wird in einer sehr reinen Atmosphäre durchgeführt. Dies gewährleistet eine hohe Reinheit der aufgebrachten Schichten.

Bevorzugt kann somit eine Beschichtung mit einem Sauerstoffgehalt von maximal 10 at-%, besonders bevorzugt von maximal 5 at-% oder sogar maximal 2 at-% erhalten werden. Dagegen wird bei konventionellen Sputterprozessen mit einem Enddruck im Bereich von zumindest 5*10$^{-5}$ mbar beschichtet, entsprechend ist hier der Restgasanteil in der abgeschiedenen Beschichtung höher.

Beim Sputterprozess wird nach Erreichen des erfindungsgemäßen Enddrucks z.B. ein stickstoffhaltiges Prozessgas eingeleitet. Der Anteil des Stickstoffs am Gesamtfluss beträgt in diesem Beispiel zumindest 30 Vol.-%, bevorzugt zumindest 40 Vol.-% und besonders bevorzugt zumindest 50 Vol.-%. Über den Anteil des Stickstoffs am Gesamtfluss während des Sputterprozesses kann die chemische Resistenz der abgeschiedenen Schicht, beispielsweise gegenüber Spülmitteln oder Reinigungsmitteln beeinflusst werden. So steigt die Resistenz der Schicht gegenüber Chemikalien mit steigendem Stickstoffanteil.

Die Beschichtung in Schritt b) erfolgt mit hohen Sputterleistungen. Die Sputterleistungen im erfindungsgemäßen Verfahren betragen hierbei 8 - 1000 W/cm$^2$, bevorzugt 10 - 100 W/cm$^2$. In einer Ausführungsform der Erfindung wird ein Magnetronsputtern, insbesondere reaktives Mittelfrequenz-Magnetronsputtern, ein Arcbasiertes Sputterverfahren, also eine Vakuumbogenbeschichtung, oder ein High Power Impulse Magnetron Sputtering-Verfahren (HiPIMS) angewendet. Alternativ oder zusätzlich kann zwischen dem Target und dem Substrat eine negative Spannung oder eine Wechselspannung aufrechterhalten werden. Die Beschichtung kann alternativ oder zusätzlich mit Unterstützung durch Anlegen einer Spannung am Substrat erfolgen. Sputterverfahren, bei denen Ionenstrahlen verwendet werden, sind für die Herstellung erfindungsgemäßer Schichten aus mehreren Gründen insbesondere für große Substrate jedoch nicht geeignet.

Einerseits weisen solche Verfahren einen niedrigen Produktionsdurchsatz auf, was sie wirtschaftlich unrentabel macht. Andererseits ist es mit solchen Verfahren schwierig, eine ausreichende Homogenität der Schichtdicke über die gesamte Fläche des Substrats zu erzielen. Dieser Effekt intensiviert sich ebenfalls mit zunehmender Substratgröße. Zu solchen ungeeigneten Verfahren zählt beispielsweise das Ionenstrahlsputtern, bei dem ein Ionenstrahl, in der Regel aus Argon, Xenon oder Krypton, in einem vorbestimmten Muster über die Targetfläche bewegt wird. Ebenso zählt dazu das ionenassistiere DC-Sputtern, bei dem nicht das Target, sondern die Substratoberfläche mit einem Ionenstrahl beschossen wird. Dies erfolgt üblicherweise mit einem Ionenstrahl aus Sauerstoff oder Stickstoff.

Gemäß einer Ausführungsform der Erfindung werden die durch das Sputtern erzeugten Partikel bei einer Depositionstemperatur, also der Temperatur des Substrats zu Beginn der Beschichtung, größer als 100 °C, bevorzugt größer 200 °C und besonders bevorzugt größer 300 °C abgeschieden. In Kombination mit den niedrigen Prozessdrücken sowie der hohen Sputterleistungen kann somit das Wachstum der Schicht, insbesondere die Morphologie und der Kristallisationsgrad, in besonders vorteilhafter Weise beeinflusst werden. Es ist jedoch auch eine Abscheidung bei niedrigeren Temperaturen, beispielsweise bei Raumtemperatur, möglich. Die gemäß dieser Ausführungsform hergestellten Hartstoffschichten zeigen die oben diskutierten mechanischen Eigenschaften wie eine hohe Kratzresistenz.

Die Depositionstemperatur sollte in der Praxis vorzugsweise nicht mehr als 800 °C, vorzugsweise nicht mehr als 600 °C, besonders bevorzugt nicht mehr als 400 °C betragen. Bei höheren Temperaturen ist es erforderlich, für den Anlagenbau besonders temperaturstabile Materialien zu verwenden, was aus wirtschaftlichen Gründen nachteilig ist.

Bei dem Sputterprozess kann es sich um eine kontinuierliche Deposition auf dem Substrat handeln. Ebenso ist es beim Sputtern üblich, dass das Substrat mehrfach an einer oder mehrerer Beschichtungsquellen (z.B. Magnetron) vorbeigeführt wird. In einem solchen Fall besteht die Beschichtung dann aus mehreren Teilschichten. Jede Teilschicht entsteht bei einer Vorbeifahrt an einer Beschichtungsquelle. Die Teilschichten können durch Grenzflächen voneinander abgegrenzt sein, die beispielsweise mittels Elektronenstrahlmikroskop sichtbar gemacht werden können. Solche Teilschichten und Grenzflächen haben vorliegend nur einen geringen Einfluss auf die optischen oder mechanischen Eigenschaften der Beschichtung. Deshalb wird im Sinne der vorliegenden Erfindung auch eine Beschichtung, die mehrere solcher Teilschichten aufweist, als eine Verschleißschutzschicht nach Anspruch 1 verstanden.

Alternativ kann der Sputtervorgang auch derart durchgeführt werden, dass die abgeschiedenen Schichten Interfaces aufweisen bzw. aus Interfaces bestehen, welche auf Grund der Prozessierung beim Herausfahren aus dem Beschichtungsbereich entstehen.

In Schritt a) kann als Substrat beispielsweise eine Glaskeramik, ein Saphirglas, ein Borosilikatglas, ein Aluminosilikatglas, ein Kalk-Natronglas, ein synthetisches Quarzglas, ein Lithiumaluminosilikatglas, ein optisches Glas und/oder ein Kristall für optische Zwecke bereitgestellt werden.

In einer Ausführungsform der Erfindung enthält das Target Silizium. Daneben kann es zumindest eines der Elemente Aluminium, Bor, Zirkon, Nickel, Chrom, Magnesium, Zink, Mangan, Wolfram, Molybdän oder Kohlenstoff umfassen. Diese zusätzlichen Elemente werden im Sinne der Erfindung auch als Dotant bezeichnet. Bevorzugt ist der Anteil an Silizium im Target in dieser Ausführungsform größer als 50 Gew.-%, besonders bevorzugt größer 60 Gew.-% und ganz besonders bevorzugt größer als 70 Gew.-%.

In einer Weiterbildung der Erfindung wird in Schritt a) ein Substrat bereitgestellt, welches eine Dekor- und/oder eine Haftvermittlerschicht aufweist. So ist beispielsweise eine Beschichtung von zumindest teilweise dekorierten Bereichen möglich und bleibt auch bei hohen Anwendungstemperaturen resistent. Auch Flachfacetten sind ohne optische Veränderungen beschichtbar und zeigen eine gute mechanische Beständigkeit.

Alternativ oder zusätzlich wird in einem dem Schritt b) nachfolgenden Verfahrensschritt eine Deckschicht auf der Verschleißschutzschicht aufgebracht.

Gemäß einer Ausführungsform der Erfindung enthält die Haftvermittlerschicht und/oder die Deckschicht Nitride, Oxide, Carbide, Carbonitride und/oder Oxinitride eines oder mehrerer Elemente ausgewählt aus der Gruppe umfassend Aluminium, Silizium, Bor, Zirkon, Titan, Nickel, Chrom und Kohlenstoff. Die Haftvermittlerschicht und/oder die Deckschicht können auch als metallische Schicht vorliegen, insbesondere enthaltend, vorzugsweise bestehend aus einem oder mehreren der folgenden Metalle: Aluminium, Silizium, Bor, Zirkon, Titan, Nickel oder Chrom.

Bevorzugt werden auch die Haftvermittlerschicht und/oder Deckschicht durch einen Sputterprozess aufgebracht, kann aber auch durch andere Verfahren dargestellt werden.

Die Erfindung wird nachfolgend anhand bevorzugter Ausführungsformen und unter Bezugnahme auf die beigefügten Figuren detaillierter beschrieben.

Die Zeichnungen zeigen:

Fig. 1 eine schematische Darstellung eines erfindungsgemäß beschichteten Substrates mit einer Verschleißschutzschicht,

Fig. 2 eine schematische Darstellung einer Ausführungsform der Erfindung mit zusätzlicher Haftvermittlerschicht zwischen dem Substrat und der Verschleißschutzschicht,

Fig. 3 eine schematische Darstellung einer Ausführungsform der Erfindung mit zusätzlicher Deckschicht, aufgebracht auf der Verschleißschutzschicht,

Fig. 4 eine schematische Darstellung einer Ausführungsform der Erfindung mit zusätzlicher Haftvermittlerschicht und zusätzlicher Deckschicht,

Fig. 5 eine schematische Darstellung einer Ausführungsform der Erfindung mit einer Verschleißschutzschicht auf einem Substrat mit einer Unterseitenbeschichtung,

Fig. 6 den spektralen Reflexionsgrad fünf weiterer mit einer erfindungsgemäßen Verschleißschutzschicht beschichteter Substrate bei Wellenlängen zwischen etwa 250 nm und 2.500 nm,

Fig. 7 den spektralen Reflexionsgrad der Substrate aus Fig. 6 bei Wellenlängen im sichtbaren Wellenlängenbereich zwischen 380 nm und 780 nm,

Fig. 8 den spektralen Reflexionsgrad verschiedener weiterer mit einer erfindungsgemäßen Verschleißschutzschicht beschichteter transparenter Substrate bei Wellenlängen zwischen etwa 250 nm und 2.500 nm, und

Fig. 9 den spektralen Reflexionsgrad der Substrate aus Fig. 8 bei Wellenlängen im sichtbaren Wellenlängenbereich zwischen 380 nm und 780 nm.

Detaillierte Beschreibung bevorzugter Ausführungsformen

Bei der nachfolgenden detaillierten Beschreibung bevorzugter Ausführungsformen bezeichnen um der Klarheit willen gleiche Bezugzeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

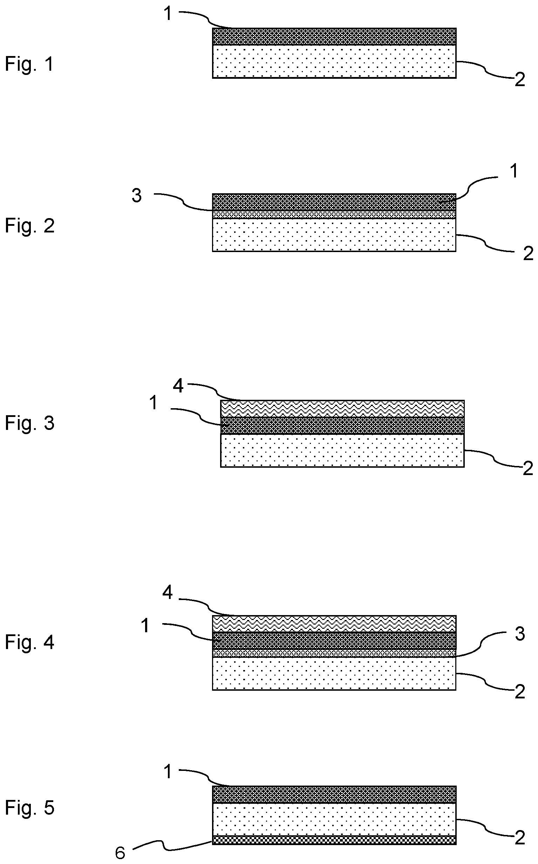

In Fig. 1 wird schematisch ein erfindungsgemäß beschichtetes Substrat 2 dargestellt. Hierbei ist das Substrat 2 mit einer Verschleißschutzschicht 1 beschichtet.

Die Verschleißschutzschicht 1 weist eine Buntheit im CIELAB-Farbsystem von C* kleiner 14, bevorzugt kleiner 7 und besonders bevorzugt kleiner 4 auf bei Lichteinstrahlung, gemessen in Remission mit Licht der Normlichtart A oder der Normlichtart C oder bei Schwarzkörperstrahlung mit einer Farbtemperatur zwischen 2.500 K und 10.000 K. Im dargestellten Ausführungsbeispiel beträgt der Wert für die Buntheit etwa 2,8 wie zum Beispiel bei einer AlSiN-Verschleißschutzschicht auf einem transparenten schwarzen Substrat wie beispielsweise einem Glaskeramikmaterial, erhältlich unter der Bezeichnung CERAN® HIGHTRANS eco, bei der Fa. Schott AG, Mainz, und mit Licht der Normlichtart A.

Zusätzlich weist die Verschleißschutzschicht 1 eine hohe Transmission im sichtbaren Wellenlängenspektrum auf. So beträgt der Lichttransmissionsgrad der Verschleißschutzschicht 1 im sichtbaren Wellenlängenspektrum zwischen 380 nm und 780 nm Wellenlänge wenigstens 60 %, bevorzugt wenigstens 75 % und besonders bevorzugt wenigstens 80 %. In einer nochmals weiteren, ebenfalls bevorzugten Ausführungsform weist die Verschleißschutzschicht 1 einen Lichttransmissionsgrad im sichtbaren Wellenlängenspektrum von wenigstens 85 %, von wenigstens 88 %, 90 % oder sogar von 92 % oder 95 % auf. In der dargestellten Ausführungsform weist die Verschleißschutzschicht 1 einen Lichttransmissionsgrad, gemessen im sichtbaren Wellenlängenspektrum, von ca. 90 % auf, wie es beispielsweise der Fall ist bei einer AlSiN-Verschleißschutzschicht auf Kalknatron-Glas, wobei sich der Lichttransmissionsgrad des Kalknatron-Glases von 92 % ohne Beschichtung auf ca. 82,9 % mit Beschichtung reduziert.

Im Sinne der Erfindung wird es für Substrate mit einem Lichttransmissionsgrad von mehr als 50 % als günstig angesehen, wenn die Gesamttransmission, also der Lichttransmissionsgrad des mit der erfindungsgemäßen Verschleißschutzschicht beschichteten Substrates, um nicht mehr als 30 Prozentpunkte, bevorzugt nicht mehr als 20 Prozentpunkte und besonders bevorzugt um nicht mehr als 10 abweicht von dem Lichttransmissionsgrad des unbeschichteten Substrates.

Im Sinne der Erfindung wird es für Substrate mit einem Lichttransmissionsgrad von zwischen 5 % und 50 % als günstig angesehen, wenn die Gesamttransmission, also der Lichttransmissionsgrad des mit der erfindungsgemäßen Verschleißschutzschicht beschichteten Substrates, um nicht mehr als 16 Prozentpunkte, bevorzugt nicht mehr als 8 Prozentpunkte und besonders bevorzugt um nicht mehr als 4 Prozentpunkte abweicht von dem Lichttransmissionsgrad des unbeschichteten Substrates.

Im Sinne der Erfindung wird es für Substrate mit einem Lichttransmissionsgrad von weniger 5 % als günstig angesehen, wenn die Gesamttransmission, also der Lichttransmissionsgrad des mit der erfindungsgemäßen Verschleißschutzschicht beschichteten Substrates, um nicht mehr als 2 Prozentpunkte , bevorzugt nicht mehr als 1 Prozentpunkte und besonders bevorzugt um nicht mehr als 0,5 Prozentpunkte abweicht von dem Lichttransmissionsgrad des unbeschichteten Substrates.

Unter einer solchen Abweichung ist die rechnerische Differenz der Lichttransmissionsgrade des Substrates ohne Beschichtung und mit Beschichtung zu verstehen.

Begünstigt wird der hohe Lichttransmissionsgrad der Verschleißschutzschicht 1 in einer Ausführungsform auch dadurch, dass diese vollständig oder im Wesentlichen amorph ausgebildet sein kann. Insgesamt beträgt der kristalline Anteil einer im Wesentlichen amorphen Verschleißschutzschicht 1 zwischen 0 Gew.-% bis höchstens 2 Gew.-%. Noch vorteilhafter ist es dabei, wenn die eventuell vorhandenen Kristallite in der im Wesentlichen amorphen Verschleißschutzschicht 1 eine mittlere Kristallgröße von vorzugsweise höchstens 5 nm aufweisen, bevorzugt 4 nm oder weniger.

Das Substrat 2 kann einen hohen Lichttransmissionsgrad aufweisen. Der Lichttransmissionsgrad eines Substrates 2 mit hohem Lichttransmissionsgrad kann beispielsweise im Bereich 70 % bis 92 % liegen, insbesondere im Bereich 80 % bis 92 %.

Es liegt aber insbesondere auch im Sinne der vorliegenden Erfindung, volumengefärbte Substrate, also eingefärbte Gläser oder Glaskeramiken, mit geringerem oder insgesamt niedrigen Lichttransmissionsgrad mit der Verschleißschutzschicht zu versehen. Insbesondere können dies dunkel oder auch schwarz eingefärbte Substrate 2, also dunkel oder schwarz eingefärbte Gläser oder Glaskeramiken, sein. Der Lichttransmissionsgrad eines eingefärbten Substrates 2 kann beispielsweise im Bereich 0,5 % bis <70 % liegen, insbesondere im Bereich 1 % bis 5 % oder im Bereich 20 % bis 40 %, insbesondere im Bereich 25 % bis 35 %.

Auch bei derartigen volumengefärbten Substraten 2 mit geringer Lichttransmission ist der erfindungsgemäß hohe Lichttransmissionsgrad der Verschleißschutzschicht von großem Vorteil, da sich die Gesamttransmission des beschichteten Substrates dann nur geringfügig reduziert im Vergleich zu einem nicht beschichteten Substrat.

Dieser besondere Vorteil der Erfindung ergibt sich zum Beispiel dann, wenn auf der Oberseite eines Substrates 2, beispielsweise einer dunkel oder schwarz eingefärbten Glaskeramik, Dekore aufgedruckt sind, die man durch eine Licht stark absorbierende Verschleißschutzschicht nicht mehr sehen würde, wenn die Verschleißschutzschicht zum Schutz der Oberfläche auf das Dekor aufgebracht wird. Die Oberseite des Substrates 2 meint hierbei diejenige Seite, welche im Betrieb zum Benutzer hinweist. Das Dekor kann somit durch den Benutzer aufgrund des hohen Lichttransmissionsgrades der Verschleißschutzschicht weiterhin wahrgenommen werden.

Ein weiterer Vorteil ergibt sich zum Beispiel dann, wenn unter einem dunkel oder schwarz eingefärbten Substrat 2, beispielsweise unterhalb einer dunkel oder schwarz eingefärbten Glaskeramik, Leucht- oder Anzeigeelemente angeordnet sind, zum Beispiel Displays zur Steuerung des Kochvorgangs im Fall einer Glaskeramik als Kochfläche. Eine stark Licht-absorbierende Verschleißschutzschicht würde hier dazu führen, dass die gesamte Lichttransmission von Substrat und Verschleißschutzschicht so niedrig wird, dass derartige Leucht- oder Anzeigeelemente nicht mehr bei Durchsicht durch den Benutzer wahrgenommen werden können.

Die Verschleißschutzschicht 1 weist dabei ein E-Modul auf, welches wenigstens 100 GPa, bevorzugt wenigstens 250 GPa und besonders bevorzugt wenigstens 300 GPa beträgt. In weiteren bevorzugten Ausführungsformen beträgt das E-Modul wenigstens 320 GPa, wenigstens 350 GPA oder wenigstens 370 GPa oder sogar wenigstens 400 GPa. Dabei beträgt das E-Modul der erfindungsgemäßen Verschleißschutzschicht 1 nicht mehr als 700 GPa, bevorzugt nicht mehr als 680 GPa und besonders bevorzugt nicht mehr als 650 GPa.

Im vorliegenden Beispiel liegt das E-Modul bei 309 GPa bei einer Verschleißschutzschicht auf der Basis von AlSiN auf einem Substrat aus CERAN® HIGHTRANS eco, gemessen mit einer Prüfkraft von 10 mN. Bei anderen Materialsystemen werden entsprechend andere E-Module erreicht.

Die Verschleißschutzschicht 1 zeichnet sich weiterhin durch eine große Härte aus. Die Härte, gemessen nach DIN EN ISO 14577 (Martens-Härte) bei einer Prüfkraft von 10 mN, beträgt dabei vorzugsweise wenigstens 5 GPa, bevorzugt wenigstens 7 GPa, besonders bevorzugt 9 GPa oder sogar 11 GPa oder darüber hinaus. Im vorliegenden Beispiel beträgt die Härte der Verschleißschutzschicht 1 etwa 14,7 GPa.

In Verbindung mit den vorstehend genannten Werten für das E-Modul ergibt sich für die Verschleißschutzschicht 1 die erfindungsgemäß hohe Kratzfestigkeit, aber auch eine gute Haftung auf dem Substrat 2.

Die Verschleißschutzschicht 1 zeichnet sich weiterhin durch eine intrinsische Schichtspannung, vorzugsweise eine definierte Druckspannung im Bereich 500 bis 1500 MPa aus. Die Druckspannung der Verschleißschutzschicht 1 auf der Basis von AlSiN auf einem Substrat aus CERAN® HIGHTRANS eco im vorliegenden Beispiel beträgt ca. 820 MPa.

Fig. 2 zeigt schematisch ein weiteres Ausführungsbeispiel, bei dem zwischen dem Substrat 2 und der Verschleißschutzschicht 1 eine weitere Schicht 3 angeordnet ist. Bei der zusätzlichen Schicht 3 kann es sich beispielsweise um eine Dekorschicht oder eine Haftvermittlerschicht handeln. Auch solche Schichten 3, die aus mehreren Teilschichten, beispielsweise einer Dekor- und einer Haftvermittlerschicht, bestehen, sind möglich. Das Substrat kann dabei vollständig oder auch nur teilweise mit der Schicht 3 versehen werden. Die Verschleißschutzschicht 1 ist dabei über der zusätzlichen Schicht 3 angeordnet, d.h. die zusätzliche Schicht 3 ist somit zwischen Substrat 2 und Verschleißschutzschicht 1 angeordnet.

Bei Ausführungsformen mit einer Haftvermittlerschicht als zusätzliche Schicht 3 handelt es sich bei der Schicht 3 beispielsweise um eine $SiO_2$-Schicht, optional mit Al dotiert. Alternativ kann es sich beispielsweise um eine Schicht aus Cr, Ni, SiON, $TiO_2$ oder $Al_2O_3$ handeln. Abhängig von der Zusammensetzung der Haftvermittlerschicht kann diese beispielsweise einen thermischen Ausdehnungskoeffizienten aufweisen, welcher zwischen den thermischen Ausdehnungskoeffizienten von Substrat 2 und Verschleißschutzschicht 1 liegt. Somit können Spannungen zwischen Substrat 2 und Verschleißschutzschicht 1 durch die Haftvermittlerschicht verringert werden.

Bevorzugt weist die Haftvermittlerschicht eine Dicke im Bereich von 1 bis 900 nm, besonders bevorzugt im Bereich von 1 bis 500 nm, besonders bevorzugt im Bereich von 1 bis 50 nm auf. Gemäß einem Ausführungsbeispiel weist der beschichtete Gegenstand zwischen Substrat 2 und der Verschleißschutzschicht 1 als Haftvermittlerschicht 3 eine $Al_2O_3$-Beschichtung mit einer Schichtdicke von 50 nm auf. Die geringe Schichtdicke ermöglicht es, die Anforderungen an den Lichttransmissionsgrad einzuhalten, so dass der Lichttransmissionsgrad des beschichteten Substrates 2 nicht beeinträchtigt wird.

Die weitere Schicht 3 kann auch eine optische Anpassschicht umfassen, um den Brechungsindex zwischen Substrat 2 und Verschleißschutzschicht 1 anzupassen.

Die weitere Schicht 3 kann ferner auch eine Diffusionsbarriereschicht umfassen oder als Diffusionsbarriereschicht ausgebildet sein, um Diffusionsprozesse zwischen Substrat 2 und Verschleißschutzschicht 1 zu reduzieren oder zu vermeiden.

Von Vorteil ist diese weitere Schicht 3, zumindest im Falle der Diffusionsbarriereschicht, der Haftvermittlerschicht oder der optischen Anpassschicht derart ausgebildet, dass sie über einen Lichttransmissionsgrad im sichtbaren Wellenlängenspektrum zwischen 380 nm und 780 nm verfügt, welcher demjenigen der erfindungsgemäßen Verschleißschutzschicht angepasst ist. Vorzugsweise weicht daher der Lichttransmissionsgrad im sichtbaren Wellenlängenspektrum dieser Schicht 3 von dem Lichttransmissionsgrad im sichtbaren Wellenlängenspektrum der Verschleißschutzschicht um nicht mehr als 2 Prozentpunkte, bevorzugt um nicht mehr als 1 Prozentpunkte und besonders bevorzugt um nicht mehr als 0,5 Prozentpunkte ab. Hierdurch kann erreicht werden, dass der Lichttransmissionsgrad im sichtbaren Wellenlängenspektrum durch die zusätzliche Schicht 3 nicht oder zumindest nicht wesentlich verschlechtert wird.

Es versteht sich, dass im Fall einer Dekorschicht auch Strukturen oder Dekorelemente vorgesehen sein können, für welche ein abweichender Lichttransmissionsgrad im sichtbaren Wellenlängenspektrum gilt.

In Fig. 3 ist eine weitere Ausführungsform der Erfindung schematisch dargestellt. Hierbei wird eine Deckschicht 4 auf die Verschleißschutzschicht 1 aufgebracht. Die Deckschicht 4 enthält in diesem Ausführungsbeispiel $SiO_2$ und weist eine Schichtdicke von 1 bis 100 nm auf. Hinsichtlich des Lichttransmissionsgrads im sichtbaren Wellenlängenspektrum gilt für diese zusätzliche Deckschicht 4 dasselbe wie für die vorstehend diskutierte Schicht 3.

Fig. 4 zeigt ein weiteres Ausführungsbeispiel, bei dem das beschichtete Substrat neben der Verschleißschutzschicht 1 sowohl eine zusätzliche Schicht 3 als auch eine Deckschicht 4 aufweist.

Die Deckschicht 4 kann gemäß einer Ausführungsform der Erfindung einen Sauerstoffgehalt aufweisen, welcher sich von derjenigen der Verschleißschutzschicht 1 unterscheidet. Hierbei ist von Vorteil der Sauerstoffgehalt der Deckschicht 4 im Mittel höher als in der Mitte der Dicke der Verschleißschutzschicht 1 bzw. in einem mittleren Bereich zwischen den beiden gegenüberliegenden Oberflächen der Verschleißschutzschicht 1 im Mittel.

In einer anderen Ausführungsform kann die Verschleißschutzschicht 1 einen Bereich umfassen, bevorzugt an der dem Substrat 2 gegenüberliegenden Oberfläche, dessen Sauerstoffgehalt höher ist als in der Mitte der Dicke der Verschleißschutzschicht 1 bzw. in einem mittleren Bereich zwischen den beiden gegenüberliegenden Oberflächen der Verschleißschutzschicht 1. Dieser Bereich kann von der Oberfläche der Verschleißschutzschicht aus gemessen bis zu einer Tiefe von etwa 100 nm in die Verschleißschutzschicht hineinragen, bevorzugt bis zu einer Tiefe von 50 nm und besonders bevorzugt bis zu einer Tiefe von 30 nm.

Durch die Deckschicht 4 oder diesen Bereich mit erhöhtem Sauerstoffgehalt kann die Resistenz gegenüber Säuren und/oder die Verschleißresistenz der Verschleißschutzschicht 1 nochmals weiter erhöht werden.

Der Sauerstoffgehalt ist dabei vorzugsweise um wenigstens 5 %, bevorzugt wenigstens 10 % erhöht.

Fig. 5 zeigt eine weitere schematische Darstellung einer Ausführungsform der Erfindung mit einer Verschleißschutzschicht 1 auf einem Substrat 2, welches zudem über eine Unterseitenbeschichtung 6 verfügt. Die Unterseitenbeschichtung 6 ist in dem Ausführungsbeispiel als Dekorschicht ausgebildet und umfasst demnach Dekorelemente und/oder Strukturen.

Die Erfindung ermöglicht es, aufgrund des sehr hohen Lichttransmissionsgrads im sichtbaren Wellenlängenspektrum auch sehr feine Strukturen der Unterseitenbeschichtung darzustellen, welche von einem Benutzer erkannt werden können, wenn er auf die mit der Verschleißschutzschicht versehene Oberfläche des Substrates schaut. So können auch extrem feine Strukturen oder Linien der Unterseitenbeschichtung mit einem Abstand von etwa 0,15 mm bei Durchsicht durch das beschichtete Substrat aus einem Abstand von etwa 25 cm erkannt werden.

Die Verschleißschutzschicht 1 ist in den Ausführungsbeispielen ganzflächig auf einer Oberfläche des Substrates 2 aufgebracht. Es ist aber auch möglich, lediglich Teilbereiche des Substrates 2 mit der Verschleißschutzschicht 1 zu versehen.

Das Substrat 2 ist in den Ausführungsbeispielen eine Glaskeramik. Weiterhin kann das Substrat 2 aber auch semitransparente, transparente oder transluzente, farblose oder volumengefärbte Gläser, insbesondere keramisierbare Gläser oder Glaskeramiken umfassen.

Das Substrat 2 kann zum Beispiel Saphirgläser, Borosilikatgläser, Aluminosilikatgläser, Kalk-Natrongläser, synthetische Quarzgläser (sogenannte "fused silica"-Gläser), Lithiumaluminosilikatgläser oder optische Gläser umfassen. Auch Kristalle für optische Anwendungen wie z.B. Kaliumfluoridkristalle oder Glaskeramiken, insbesondere LAS-Glaskeramiken, können als Substrat 2 verwendet werden.

Bei den abgebildeten Ausführungsformen handelt es sich bei dem Substrat 2 um eine LAS-Glaskeramik mit einem thermischen Ausdehnungskoeffizienten $\alpha_{20-300}$ im Bereich +/-2*$10^{-6}$ $K^{-1}$ gemäß ISO 7991. Ein derart geringer thermischer Ausdehnungskoeffizient ermöglicht es, dass eine gute Temperaturbeständigkeit des beschichteten Substrates 2 erreicht werden kann.

Die Oberfläche der Verschleißschutzschicht 1 ist chemisch inert gegenüber Luft, Wasser, Reinigungsmitteln wie Essig- und Zitronensäure sowie anderen Substanzen, wie sie bei der Nahrungsmittelzubereitung verwendet werden, insbesondere Salzwasser.

Bei einem Vergleich zweier Flächen der Verschleißschutzschicht 1, wobei eine erste über einen Zeitraum von 24 Stunden einer Belastung mit einem potentiellen Reaktionspartner, im Beispiel Zitronensäure, ausgesetzt wurde, mit einer Vergleichsfläche der Verschleißschutzschicht 1, welche nicht einem potentiellen Reaktionspartner ausgesetzt wurde, konnte eine sehr geringe Abweichung im Lichttransmissionsgrad im sichtbaren Wellenlängenspektrum von weniger als 2 Prozentpunkte, bevorzugt weniger als 1 Prozentpunkt und besonders bevorzugt weniger als 0,5 Prozentpunkte beobachtet werden.

Die Einwirkung des potentiellen Reaktionspartners, im Ausführungsbeispiel Zitronensäure, erfolgte bei Raumtemperatur, wobei ein Tropfen Flüssigkeit auf die Verschleißschutzschicht aufpipettiert wurde und unter einer Uhrglasscheibe für 24 Stunden abgedeckt wurde.

Damit zeigt sich, dass die Verschleißschutzschicht 1 ihre optischen Eigenschaften auch bei Angriffen mit potentiellen Reaktionspartnern beibehält. Erfindungsgemäß wird die Verschleißschutzschicht 1 als chemisch inert angesehen, wenn die Abweichung im Lichttransmissionsgrad im sichtbaren Wellenlängenspektrum weniger als 2 Prozentpunkte beträgt, bevorzugt weniger als 1 Prozentpunkt und besonders bevorzugt weniger als 0,5 Prozentpunkte.

Die Oberfläche der Verschleißschutzschicht 1 und, in den gezeigten Ausführungsbeispielen, die Verschleißschutzschicht 1 insgesamt, ist vollständig frei von gesundheitsgefährdenden Stoffen. Dies betrifft insbesondere Materialien umfassend Arsen, Antimon, Blei, Quecksilber, Cadmium, sechswertiges Chrom oder Wismuth, aber auch Weichmacher (Phthalate) oder flüchtige organische Komponenten (VOCs). Demnach ist die Verschleißschutzschicht 1 frei von Arsen, Antimon, Blei, Quecksilber, Cadmium, sechswertiges Chrom oder Wismuth, sowie Weichmachern (Phthalate) und flüchtigen organischen Komponenten (VOCs).

Die Verschleißschutzschicht 1 in dem Ausführungsbeispiel weist eine Dicke von 1.000 nm auf. Im Allgemeinen ist aber bereits eine Schichtdicke von nur 500 nm, bevorzugt wenigstens 800 nm, besonders bevorzugt wenigstens 1.000 nm ausreichend, um den erfindungsgemäßen mechanischen Schutz zu erzielen und damit das Substrat vor mechanischen Belastungen, Verschleiß und Kratzern zu schützen.

Dickere Ausbildungen der Verschleißschutzschicht 1 bis 5.000 nm, bevorzugt weniger als 3.500 nm, und besonders bevorzugt weniger als 2.000 nm, sind ebenfalls möglich, welche einen besseren Schutz vor mechanischen Einwirkungen bieten und damit eine längere Haltbarkeit und, etwa im Fall von Kochflächen, eine edle Anmutung der Kochfläche auch nach vielen Jahren des Gebrauchs.

Die Verschleißschutzschicht 1 weist bei einer Einwirkdauer einer hohen Temperatur von 500 °C über 30 Minuten über eine Anzahl von wenigstens 100 Zyklen, vorzugsweise von wenigstens 1.000 Zyklen, keine nennenswerten Änderungen in ihren optischen Eigenschaften, insbesondere in ihrem Lichttransmissionsgrad im sichtbaren Wellenlängenbereich, auf und ist demzufolge als temperaturstabil im Sinne der Erfindung anzusehen.

Die Verschleißschutzschicht 1 wurde dabei jeweils von Raumtemperatur auf die Temperatur von 500 °C mit einem Temperaturanstieg von vorzugsweise zwischen 1 °C bis 50 °C, im Beispiel von etwa 5 °C pro Minute, erwärmt, gefolgt von einer Haltezeit von 30 Minuten und einem Abkühlen auf Raumtemperatur. Hierbei wurde beobachtet, dass die Abweichung im Lichttransmissionsgrad der Schicht im sichtbaren Wellenlängenspektrum weniger als 5 Prozentpunkte beträgt, bevorzugt weniger als 2 Prozentpunkte und besonders bevorzugt weniger als 1 Prozentpunkt. Vor diesem Hintergrund kann die Verschleißschutzschicht 1 als temperaturstabil im Sinne der Erfindung angesehen werden.

Die Verschleißschutzschicht 1 gemäß der abgebildeten Ausführungsform in Fig. 1 ist eine Hartstoffschicht auf Basis von Aluminiumsiliziumnitrid (AlSiN). Andere ebenfalls bevorzugte Ausführungsformen basieren auf AlN oder Si3N4.

Alternativ sind auch Verschleißschutzschichten 1 auf der Basis von $Al_2O_3$, SiON, AlSiON, $ZrO_2$, BN, TiAlON, MgAlO, MgAlON oder AlON möglich.

Unter dem Begriff "auf der Basis von" ist zu verstehen, dass die Schichten neben diesen Bestandteilen noch weitere Bestandteile enthalten können, insbesondere Dotierungen, um gezielt Eigenschaften der Schicht zu optimieren. Der Gehalt des Dotiermaterials ist dabei geringer als 50 Gew.-%, bevorzugt geringer als 40 Gew.-% und besonders bevorzugt geringer als 30 Gew.-% der Schicht. Die Stöchiometrie der Schichten kann sich entsprechend der Dotierung ändern.

Hierdurch können bestimmte Eigenschaften der Verschleißschutzschicht 1 wie beispielsweise Härte, E-Modul oder die Widerstandsfähigkeit gegen Abrieb, beispielsweise die Polierresistenz, weiter modifiziert werden.

So kann die Verschleißschutzschicht beispielsweise mit einem der folgenden Elemente dotiert sein: Stickstoff, Sauerstoff, Kohlenstoff, Aluminium, Silizium, Bor, Zirkon, Titan, Nickel, Chrom, Magnesium, Molybdän, Wolfram, Zink, Mangan, Scandium, Yttrium oder seltene Erden. Yttrium kann beispielsweise in Kombination mit $ZrO_2$ oder BN zur thermischen Stabilisierung der Beschichtung eingesetzt werden.

Die Verschleißschutzschicht 1 umfasst in einer weiteren Ausführungsform bevorzugt einen Bereich, welcher nicht elektrisch leitfähig bei Raumtemperatur ist. Allgemein wird im Sinne der Erfindung ein Flächenwiderstand von wenigstens 1 kΩ/square, bevorzugt wenigstens 0,5 MΩ/square und besonders bevorzugt wenigstens 2 MΩ/square gemessen mit einer Vierpunktmessung, als günstig angesehen.

Nachfolgend werden beispielhaft verschiedene Eigenschaften unterschiedlicher erfindungsgemäßer Verschleißschutzschichten, aufgebracht auf transparente Substrate aus Glas oder Glaskeramik, dargestellt.

Die Tabelle 1 zeigt Ausführungsbeispiele verschiedener Verschleißschutzschichten, welche auf verschiedene transparente Substrate aufgebracht sind, sowie Eigenschaften der erhaltenen beschichteten Substrate.

Tabelle 1: Ausführungsbeispiele verschiedener transparenter Verschleißschutzschichten

| # | 1 | 2 | 3 | 4 |
|---|---|---|---|---|
| Material | AlSiN | AlSiN:Mo | AlSiN:B | MgA1204 |
| Substrat | GK | GK | GK | GK |
| Dicke [$\mu$m] | 1,3 | >1 | >1 | >1 |
| L* | 45,09 | 45,58 | 45,25 | 29,89 |
| a* | -1,44 | -0,19 | 0,89 | 0,3 |
| b* | -1,56 | -0,88 | -0,85 | -0,85 |
| $\tau_{vis}$ [%] | 1,27 | 0,32 | 1,21 | 1,38 |
| Haze | 19,2 | 44,9 | 29 | 31,1 |
| Clarity | 74,8 | 70,6 | 60,9 | 59,3 |
| | | | | |
| # | 5 | 6 | 7 | |
| Material | AlSiN | Si3N4 | SiOxNy | |
| Substrat | SL | SL | SL | |
| Dicke [$\mu$m] | >1 | >1 | >1 | |
| L* | 49,4 | 47,73 | 39,62 | |
| a* | -1,78 | -0,3 | -5,59 | |
| b* | -0,14 | -2,3 | -1,71 | |
| $\tau_{vis}$ [%] | 79,1 | 81,6 | 86,8 | |
| Haze | 0,63 | 0,34 | 1,01 | |
| Clarity | 99,8 | 99,8 | 100 | |
| | | | | |

Die Verschleißschutzschichten sind dabei aufgebracht auf transparente Substrate aus oder umfassend Glas, im Beispiel handelsübliches Kalknatron-Glas (Bezeichnung "SL" in der Tabelle 1) oder aus oder umfassend Glaskeramik-Material, im Beispiel CERAN HIGHTRANS® eco, erhältlich bei der Fa. Schott AG, Mainz (Bezeichnung "GK" in der Tabelle 1).

Bei dem Glaskeramik-Material handelt es sich um eine volumengefärbte Glaskeramik mit einem Lichttransmissionsgrad $\tau_{vis}$ von ca. 1,5 %. Der Lichttransmissionsgrad des unbeschichteten Kalknatron-Glases liegt bei etwa 92 %. Der in der Tabelle 1 angegebene Lichttransmissionsgrad zeigt den gegen Schwarzstandard gemessenen Lichttransmissionsgrad des jeweils beschichteten Substrates. Hier zeigt sich die geringe Veränderung des Lichttransmissionsgrades des mit einer erfindungsgemäßen Verschleißschutzschicht 1 beschichteten Substrates 2 im Vergleich zu einem unbeschichteten Substrat.

Weiterhin sind die wesentlichen Farbparameter des jeweiligen beschichteten Substrates angegeben, so der entsprechende Farbraum im CIELAB-Farbsystem für die Lichtart D65, der Haze-Wert, also das Streuverhalten unter einem Winkel > 2,5°, und die Klarheit ("Clarity"), also das Streuverhalten unter einem Winkel von < 2,5°, der jeweiligen Verschleißschutzschicht gemäß der internationalen Norm ASTM D1003.

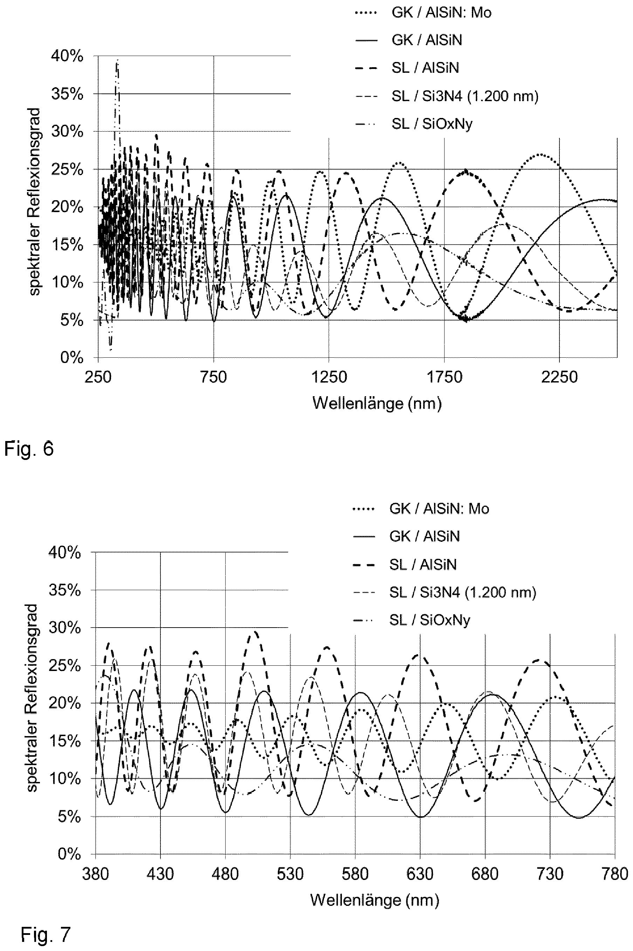

Die Figuren 6 und 7 zeigen den spektralen Reflexionsgrad eines unbeschichteten sowie fünf weiterer mit einer erfindungsgemäßen Verschleißschutzschicht beschichteter transparenter Substrate. Bei den Substraten handelt es sich um die in Tabelle 1 dargestellten Substrate, demnach CERAN HIGHTRANS® eco Glaskeramik-Material oder Kalknatron-Glas.

Fig. 6 zeigt den spektralen Reflexionsgrad der beschichteten Substrate in einem Wellenlängenbereich zwischen etwa 250 nm und 2.500 nm; Fig. 7 zeigt den spektralen Reflexionsgrad der beschichteten Substrate im sichtbaren Wellenlängenbereich zwischen 380 nm und 780 nm.

Hierbei handelt es sich um folgende Ausführungsbeispiele:

1) CERAN HIGHTRANS® eco Glaskeramik-Material ("GK"), mit einer erfindungsgemäßen Verschleißschutzschicht auf der Basis von AlSiN (schwarze Linie)

2) Kalknatron-Glas ("SL") mit einer erfindungsgemäßen Verschleißschutzschicht auf der Basis von AlSiN (dick gestrichelt)

3) Kalknatron-Glas mit einer erfindungsgemäßen Verschleißschutzschicht auf der Basis von $Si_3N_4$ (Schichtdicke 1.200 nm) (dünn gestrichelt)

4) Kalknatron-Glas mit einer erfindungsgemäßen Verschleißschutzschicht auf der Basis von $SiO_xN_y$ (Striche mit zwei Punkten)

5) CERAN HIGHTRANS® eco Glaskeramik-Material mit einer erfindungsgemäßen Verschleißschutzschicht auf der Basis von AlSiN:Mo (gepunktet)

Der spektrale Reflexionsgrad zeigt beispielsweise im sichtbaren Wellenlängenspektrum einen periodischen Verlauf mit einem Maximum im Bereich von etwa 30 % und einem Minimum im Bereich von etwa 5 %.

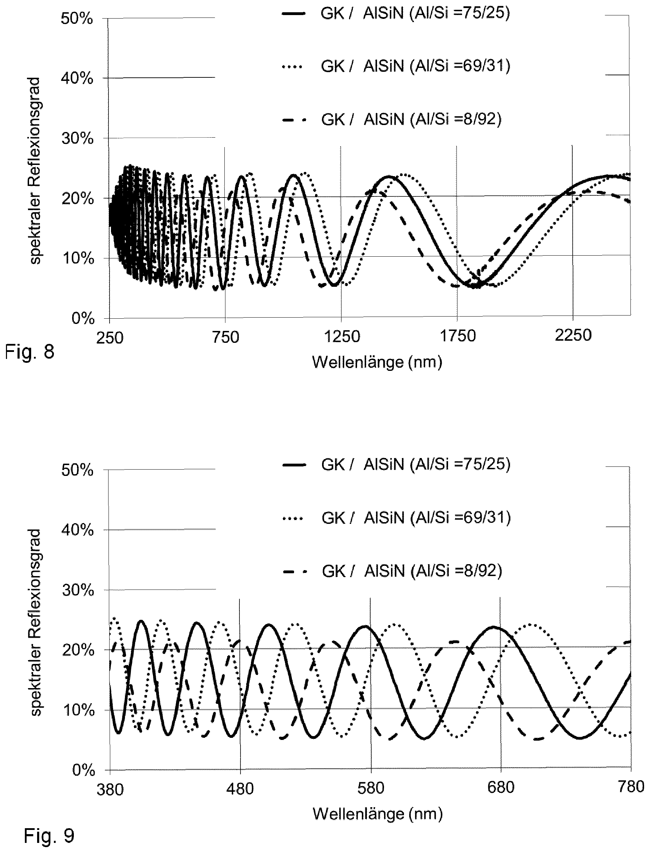

Die Figuren 8 und 9 zeigen den spektralen Reflexionsgrad von drei weiteren mit einer erfindungsgemäßen Verschleißschutzschicht aus AlSiN beschichteten transparenten Substraten, wobei es sich in den Beispielen um das Glaskeramik-Material CERAN HIGHTRANS® eco handelt.

Fig. 8 zeigt den spektralen Reflexionsgrad der Substrate in einem Wellenlängenbereich zwischen etwa 250 nm und 2.500 nm; Fig. 9 zeigt den spektralen Reflexionsgrad der Substrate im sichtbaren Wellenlängenbereich zwischen 380 nm und 780 nm.

Hierbei handelt es sich um folgende Ausführungsbeispiele:

1) CERAN HIGHTRANS® eco Glaskeramik-Material mit einer erfindungsgemäßen Verschleißschutzschicht auf der Basis von AlSiN (75:25), aufgebracht mittels Co-Sputtern (schwarze Linie)

2) CERAN HIGHTRANS® eco Glaskeramik-Material mit einer erfindungsgemäßen Verschleißschutzschicht auf der Basis von AlSiN (69:31), (gepunktete Linie)

3) CERAN HIGHTRANS® eco Glaskeramik-Material mit einer erfindungsgemäßen Verschleißschutzschicht auf der Basis von AlSiN (8:92), (gestrichelte Linie)

Die Tabelle 2 zeigt Ausführungsbeispiele verschiedener erfindungsgemäßer Verschleißschutzschichten auf der Basis von AlSiN, aufgebracht auf transparente Substrate aus Glaskeramik-Material, im Beispiel auf das Glaskeramik-Material CERAN HIGHTRANS® eco, sowie deren mechanischen, chemischen und optischen Eigenschaften.

Tabelle 2: Ausführungsbeispiele verschiedener erfindungsgemäßer Verschleißschutzschichten aus AlSiN, aufgebracht auf transparente Substrate aus Glaskeramik-Material

| # | | 8 | 9 | 10 | 11 | 12 |
|---|---|---|---|---|---|---|
| Material | | | | | | |
| | Al | 10 | 18,5 | 25 | 33,5 | 42 |
| | Si | 90 | 81,5 | 75 | 66,5 | 58 |
| Abrasionswert | | 0,32 | 0,27 | 0,49 | 0,30 | 1,01 |
| Chem. Beständigkeit | | | | | | |
| | Sidol | 0 | 0 | 0 | 0 | 0 |
| | Palmoliv | 0 | 0 | 0 | 0 | 0 |
| | Zitronensäure | 0 | 0 | 0 | 0 | 0 |
| | Essigsäure | 0 | 0 | 0 | 0 | 0 |
| Farbstabilität $\Delta E$ | | | | | | |
| | 390°C/80h | 1,5 | 0,3 | 1,0 | 1,4 | 0,9 |
| | 650°C/75h | 1,4 | 0,9 | 0, 6 | 0,9 | 4,9 |

Bei sämtlichen fünf Ausführungsbeispielen handelt es sich um eine AlSiN-Verschleißschutzschicht, welche auf das Glaskeramik-Material CERAN HIGHTRANS® eco aufgebracht ist. Die in den Spalten dargestellten Ausführungsbeispiele unterscheiden sich in ihrem jeweiligen Al:Si-Verhältnis, ausgehend von einem Verhältnis Al:Si von 10:90 bis hin zu einem Verhältnis Al:Si von 42:58. Das Verhältnis Aluminium zu Silizium in der jeweiligen Verschleißschutzschicht variiert demnach von ca. 0,1 in dem ersten Ausführungsbeispiel, über ca. 0,2, 0,3, 0,5 bis hin zu ca. 0,7 in dem fünften Ausführungsbeispiel. Höhere Verhältnisse sind ebenfalls möglich.

Der Kratzschutz wurde mittels eines Abrasionstests untersucht. Mit diesem Test wird die Wirkung von Sandkörnern auf beschichtete Substrate analysiert, um eine Aussage zur mechanischen Belastbarkeit der Oberfläche zu erhalten. Die unbeschichtete Glaskeramik besitzt einen Abrasionswert von 5. Ein Wert von kleiner als "1" bedeutet, dass der Abrasionstest "sehr gut" bestanden wurde. Anhand der Tabelle wird deutlich, dass die beschichteten Substrate der Ausführungsbeispiele 8 - 11 mit Werten zwischen 0,27 und 0,49 im schlechtesten Fall den Abrasionstests "sehr gut" bestanden haben. Lediglich die Verschleißschutzschicht gemäß Ausführungsbeispiel 12 mit einem höheren Anteil Aluminium erreicht einen Wert von 1,01, was ein "gut" bedeutet. Damit haben sämtliche in der Tabelle dargestellten AlSiN-Verschleißschutzschichten den Abrasionstest bestanden. Die Dicke der AlSiN-Verschleißschutzschichten betrug in den Beispielen 1.100 nm.

Die chemische Beständigkeit wurde geprüft, indem die beschichtete Substratoberfläche verschiedenen Substanzen ausgesetzt wurde, welche im täglichen Gebrauch auch auftreten können. Hierzu gehören die Substanzen eines Glaskeramikreinigers am Beispiel von "Sidol", eines Spulmittels am Beispiel von "Palmoliv", 10-prozentige Zitronensäure und Essigsäure. Die Substanzen wurden dabei auf die jeweilige Verschleißschutzschicht aufpipettiert, wonach dieser Bereich für 24 Stunden bei Raumtemperatur abgedeckt wurde.

Der in der Tabelle eingetragene Wert "0" bedeutet, dass die Abweichung im Lichttransmissionsgrad bei sämtlichen Ausführungsbeispielen weniger als 2 Prozentpunkte beträgt und somit die Tests bestanden wurden. Damit ist die chemische Beständigkeit sämtlicher Verschleißschutzschichten in den Ausführungsbeispielen gegeben und die Verschleißschutzschichten werden als chemisch inert angesehen.

Schließlich ist in der Tabelle 2 die Farbstabilität $\Delta E_{p,v}$ der jeweiligen Verschleißschutzschicht nach Temperaturbelastung angegeben. Die beschichteten Substrate wurden dabei einer Temperatur von 390 °C über eine Dauer von 80 h sowie einer Temperatur von 650 °C über eine Dauer von 75 h ausgesetzt. Die Farbstabilität wurde bei Normlichtart D65 ermittelt. Hierbei wurden ein Substrat mit erfindungsgemäßer Verschleißschutzschicht nach der entsprechenden Temperatureinwirkung und ein Substrat ohne Verschleißschutzschicht miteinander verglichen. Im Ergebnis zeigen sich sehr geringe Farbveränderungen, welche mit einer Ausnahme bei $\Delta E_{p,v} < 2$ liegen. Dabei wird ein Farbabstand von $\Delta E_{p,v} < 4$ bereits als farbneutral im Sinne der Erfindung angesehen.

Vorliegend weisen die Verschleißschutzschichten der ersten vier Ausführungsbeispiele sehr geringe Farbabweichungen auf und können demzufolge als farbstabil angesehen werden. In anderen Worten, diese erfindungsgemäßen Verschleißschutzschichten können bei Temperaturen von zumindest 350 °C, bevorzugt von zumindest 400 °C und besonders bevorzugt von zumindest 500 °C eingesetzt werden, ohne dass es zu Einbußen bei der Transparenz und/oder der Farbe oder anderen optischen Eigenschaften der Verschleißschutzschicht kommt.

Im Ergebnis zeigen sich sehr gute mechanische, chemische und optische Eigenschaften erfindungsgemäßer Verschleißschutzschichten auf der Basis von AlSiN, insbesondere bei Verhältnissen von Al:Si von 2 oder weniger, bevorzugt von 1,1 oder weniger oder sogar von 0,7 oder weniger.

Die Tabelle 3 zeigt Ausführungsbeispiele zweier erfindungsgemäßer Verschleißschutzschichten, ebenfalls auf der Basis von AlSiN, aufgebracht auf ein Glaskeramik-Material, im Beispiel auf das Glaskeramik-Material CERAN HIGHTRANS® eco, sowie deren mechanischen Eigenschaften.

Tabelle 3: Mechanischen Eigenschaften zweier erfindungsgemäßer Verschleißschutzschichten auf der Basis von AlSiN, aufgebracht auf ein Glaskeramik-Material CERAN HIGHTRANS® eco.

| # | 13 | 14 |
|---|---|---|
| Al/Si | 25/75 | 33/67 |
| Prüfkraft | 5 mN | 5 mN |
| Martens-Härte $H_M$ | 9120 MPa | 8912 MPa |
| E-Modul E/ (1-v²) | 212 GPa | 209 GPa |

Die in den beiden Spalten dargestellten

Ausführungsbeispiele unterscheiden sich in ihrem jeweiligen Al:Si-Verhältnis, wobei das Verhältnis Al:Si in Gew.-% im ersten Ausführungsbeispiel 25:75 (Verhältnis Al:Si = 0,3) und im zweiten 33:67 (Verhältnis Al:Si = 0,5) beträgt.

Der mechanische Widerstand dieser beiden erfindungsgemäßen Verschleißschutzschichten wurde mit dem Martens-Härteprüfverfahren gemäß DIN EN ISO 14577 ermittelt, wobei eine Prüfkraft von 5 mN aufgebracht wurde. Die gemessene Martens-Härte beträgt im Fall der ersten erfindungsgemäßen Verschleißschutzschicht $H_M$ = 9,120 GPa und im Fall der zweiten erfindungsgemäßen Verschleißschutzschicht $H_M$ = 8,912 GPa. Die Härte dieser erfindungsgemäßen Verschleißschutzschichten ist demnach deutlich höher als die Härte einer unbehandelten Glaskeramik-Oberfläche, welche etwa 3 bis 4 GPa beträgt.

Zudem ist das E-Modul der beiden erfindungsgemäßen Verschleißschutzschichten angegeben, welches 212 GPa im ersten Fall und 209 GPa im zweiten Fall beträgt und damit deutlich mehr als die 100 GPa, wobei sich bereits ein E-Modul ab 100 GPa als günstig herausgestellt hat.

Die Tabelle 4 zeigt die Schichtspannung von Verschleißschutzschichten auf der Basis von AlSiN und $ZrO_2$.

Tabelle 4: Schichtspannung und Schichtdicke verschiedener Verschleißschutzschichten auf der Basis von $ZrO_2$ sowie AlSiN.

|  | Spannungen [MPa] | Schichtdicke [nm] |
|---|---|---|
|  |  |  |
| $ZrO_2$ | -1000 | 2000 |
| AlSiN | -820 | 1.1000 |
|  | -1250 | 1.1000 |
|  | -552 | 1.1000 |

Schließlich zeigt die Tabelle 5 anhand zweier weiterer Ausführungsbeispiele von erfindungsgemäßen Verschleißschutzschichten den Farbort gemessen in Reflexion gegen Schwarzfalle bei Beleuchtung mit unterschiedlichen Normlichtarten.

Tabelle 5: Farbort zweier erfindungsgemäßer Verschleißschutzschichten gemessen in Reflexion gegen Schwarzfalle bei Beleuchtung mit unterschiedlichen Normlichtarten

| Normlichtart: |  | D55 / 10° | D65 / 10° | D75 / 10° | A / 10° | C / 10° | F2 / 10° |
|---|---|---|---|---|---|---|---|
|  |  |  |  |  |  |  |  |
| AlSiN 1,1 $\mu$m | L* | 43,87 | 43,91 | 43,94 | 43,62 | 43,94 | 43,46 |
| auf CERAN® HIGHTRANS eco | a* | -2,19 | -2,31 | -2,40 | -1,85 | -2,00 | -1,55 |
|  | b* | -1,34 | -0,97 | -0,81 | -2,18 | -1,00 | -4,91 |
|  |  |  |  |  |  |  |  |
|  | C* | 2,57 | 2,51 | 2,53 | 2,86 | 2,24 | 5,15 |
| $Si_3N_4$ 1,6 $\mu$m | L* | 50,65 | 50,81 | 50,8 | 50,66 | 50,79 | 51,09 |
| auf CERAN® HIGHTRANS eco | a* | -0,59 | -0,28 | -0,17 | -0,96 | -0,15 | -1,25 |
|  | b* | -1,82 | -1,80 | -1,76 | -1,73 | -1,83 | 0,43 |
|  | C* | 1,91 | 1,82 | 1,77 | 1,98 | 1,84 | 1,32 |

Bei den beiden erfindungsgemäßen Verschleißschutzschichten handelt es sich im ersten Fall um eine 1,1 $\mu$m dicke AlSiN-Verschleißschutzschicht (Al/Si = 25/75), aufgetragen auf ein Glaskeramik-Substrat CERAN® HIGHTRANS eco, und im zweiten Fall um eine 1,6 $\mu$m dicke $Si_3N_4$-Verschleißschutzschicht, ebenfalls aufgetragen auf ein Glaskeramik-Substrat CERAN® HIGHTRANS eco.

Es zeigt sich eine Buntheit im CIELAB-Farbsystem von C* zwischen 2,24 und 5,15 im Fall der erstgenannten Verschleißschutzschicht sowie von 1,82 bzw. 1,98 im Fall der zweiten Verschleißschutzschicht.

Bei allen gemessenen Normlichtarten, also bei D55/10°, D65/10°, D75/10° sowie A/10°, C/10° und F/10° liegt der Farbort deutlich unter dem geforderten Wert C* kleiner 14, sowie kleiner 7. Mit einer Ausnahme liegt der Wert sogar unter dem besonders bevorzugten Wert C* kleiner 4.

Die erfindungsgemäße Verschleißschutzschicht 1 oder ein mit der erfindungsgemäßen Verschleißschutzschicht 1 versehenes Substrat 2 kann auf vielen technischen Gebieten verwendet werden, bei denen die Oberfläche einer mechanischen Beanspruchung ausgesetzt ist und/oder bei welchen eine hohe Transmission im sichtbaren Wellenlängenbereich gewünscht ist.

Das mit der Verschleißschutzschicht 1 beschichtete Substrat 2 kann damit insbesondere als optisches Bauteil wie Lupe, Linse oder Filter, als Koch- oder als Heizfläche, als Heizplatte, als Warmhalteplatte, als Glas- oder Glaskeramikarbeitsplatte, für Glas- oder Glaskeramikbauteile in Haushaltsgeräten, beispielsweise als Arbeitsplatte oder Kochfläche, als Ofensichtscheibe, als Kaminsichtscheibe, als Backofensichtscheibe, für Kühlschrank- und Küchenfronten, als Sichtscheibe im Fahrzeugbereich, für Uhrengläsern, für Brillen, etwa VR- oder AR-Brillen, oder als Display beispielsweise für Tablet-PCs oder Mobiltelefone, insbesondere auch als Touchdisplay, verwendet werden.

Bezugszeichenliste:

1    Verschleißschutzschicht
2    Substrat
3    Schicht
4    Deckschicht
6    Unterseitenbeschichtung


**Patentansprüche**

1.  Substrat umfassend oder bestehend aus Glas oder Glaskeramik mit einer wenigstens semitransparenten harten Verschleißschutzschicht, wobei

    die Verschleißschutzschicht auf zumindest einer Oberfläche des Substrates zumindest bereichsweise, vorzugsweise ganzflächig, ausgebildet ist und
    eine Buntheit im CIELAB-Farbsystem von C* kleiner 14, bevorzugt kleiner 7 und besonders bevorzugt kleiner 4 aufweist bei Lichteinstrahlung, gemessen in Remission bei Normlichtart A oder Normlichtart C oder bei Schwarzkörperstrahlung mit einer Temperatur zwischen 2.500 K und 10.000 K, und
    wobei die Verschleißschutzschicht einen Lichttransmissionsgrad im sichtbaren Wellenlängenspektrum zwischen 380 nm und 780 nm Wellenlänge von wenigstens 60 %, bevorzugt von wenigstens 75% und besonders bevorzugt von wenigstens 80 % aufweist.

2.  Substrat gemäß Anspruch 1, wobei die intrinsische Schichtspannung, vorzugsweise die Druckspannung, der Verschleißschutzschicht mehr als 500 MPa und weniger als 1500 MPa, vorzugsweise zwischen 525 und 1000 MPa, besonders bevorzugt zwischen 550 und 750 MPa beträgt.

3.  Substrat gemäß einem der vorstehenden Ansprüche, wobei der Lichttransmissionsgrad der Verschleißschutzschicht im sichtbaren Wellenlängenspektrum zwischen 70 % und 92 % beträgt, bevorzugt zwischen 78 % und 90 %, besonders bevorzugt zwischen 80 % und 88 %.

4.  Substrat gemäß einem der vorstehenden Ansprüche, wobei das Substrat semi-transparente, transparente oder transluzente, farblose oder volumengefärbte keramisierbare Gläser oder Glaskeramiken, vorzugsweise mit einem thermischen Ausdehnungskoeffizienten $\alpha_{20\text{-}300}$ im Bereich +/- $2*10^{-6}$ $K^{-1}$, umfasst.

5.  Substrat gemäß dem vorstehenden Anspruch, wobei das Substrat dunkel oder schwarz eingefärbt ist, und wobei das Substrat über einen Lichttransmissionsgrad von weniger als 20 %, weniger als 10 %, zwischen 0,5 % und 8 % oder zwischen 0,5 % und 5 % verfügt.

6.  Substrat gemäß dem vorstehenden Anspruch, wobei das Substrat transparent oder semi-transparent ausgebildet ist und zumindest eine weitere Beschichtung auf der der Verschleißschutzschicht gegenüberliegenden Oberfläche umfasst, bevorzugt eine Dekorschicht, besonders bevorzugt als Unterseitenbeschichtung.

7.  Substrat gemäß einem der vorstehenden Ansprüche, wobei das Substrat in einem mit der Verschleißschutzschicht beschichteten Bereich eine Gesamttransmission im sichtbaren Wellenlängenspektrum zwischen 380 nm und 780 nm Wellenlänge von wenigstens 60 %, bevorzugt von wenigstens 75% und besonders bevorzugt von wenigstens 80 %, von wenigstens 85 %, von wenigstens 88 %, 90 %, 92 %, 95 % aufweist, gemessen an einem Substrat mit einer Dicke von 4 mm und einer Verschleißschutzschicht mit einer Dicke von 500 nm.

**8.** Substrat gemäß einem der vorstehenden Ansprüche, wobei die Verschleißschutzschicht eine Härte, gemessen nach DIN EN ISO 14577 (Martens-Härte) bei einer Prüfkraft von 10 mN von wenigstens 5 GPa, bevorzugt wenigstens 7 GPa, besonders bevorzugt 9 GPa oder 11 GPa aufweist, und/oder wobei der Plastizitätsindex, also das Verhältnis von Härte zu E-Modul der Verschleißschutzschicht zumindest 0,007, bevorzugt zumindest 0,03, und besonders bevorzugt > 0,1 ist.

**9.** Substrat gemäß einem der vorstehenden Ansprüche, wobei die Oberfläche der Verschleißschutzschicht chemisch inert ist gegenüber zumindest einer, vorzugsweise aller der nachfolgend genannten Substanzen Wasser, Reinigungsmitteln wie Essig- und Zitronensäure sowie Substanzen, wie sie bei der Nahrungsmittelzubereitung verwendet werden, insbesondere Salzwasser, und/oder wobei die Oberfläche der Verschleißschutzschicht frei von gesundheitsgefährdenden Stoffen ist, insbesondere frei von Arsen, Antimon, Blei, Quecksilber, Cadmium, sechswertiges Chrom oder Wismuth, sowie Weichmachern (Phthalate) und flüchtigen organischen Komponenten (VOCs).

**10.** Substrat gemäß einem der vorstehenden Ansprüche, wobei die Verschleißschutzschicht gegenüber Temperaturen von zumindest 350 °C, bevorzugt von zumindest 400 °C und besonders bevorzugt von zumindest 500 °C bei einer Dauer von 30 Minuten über eine Anzahl von wenigstens 100 Zyklen, vorzugsweise von wenigstens 1.000 Zyklen dauerhaft temperaturstabil ist.

**11.** Substrat gemäß einem der vorstehenden Ansprüche, wobei die Verschleißschutzschicht vollständig oder im Wesentlichen amorph ausgebildet ist, und wobei der kristalline Anteil der Verschleißschutzschicht vorzugsweise zwischen 0,001 Gew.-% bis höchstens 2 Gew.-% beträgt, und/oder wobei die Dicke der Verschleißschutzschicht zwischen 500 nm und 5.000 nm beträgt, bevorzugt wenigstens 800 nm, besonders bevorzugt wenigstens 1.000 nm und bevorzugt weniger als 3.500 nm, besonders bevorzugt weniger als 2.000 nm.

**12.** Substrat gemäß einem der vorstehenden Ansprüche, wobei die Verschleißschutzschicht wenigstens einen der folgenden Bestandteile enthält: Aluminiumoxid, Siliziumzirkonoxid, Zirkonoxid, Siliziumnitrid, Siliziumzirkonnitrid, Siliziumaluminiumnitrid, Aluminiumnitrid, Siliziumoxinitrid, Siliziumzirkonoxinitrid, Siliziumaluminiumoxinitrid, Aluminiumoxinitrid.

**13.** Substrat gemäß einem der vorstehenden Ansprüche, wobei zwischen der Oberfläche des Substrates und der Verschleißschutzschicht eine weitere Schicht aufgebracht ist, gebildet aus Nitriden, Oxiden, Carbonitriden, Oxicarbiden und/oder Oxinitriden ausgewählt aus der Gruppe der Elemente Aluminium, Silizium, Bor, Zirkon, Titan, Nickel, Chrom, Wolfram, Magnesium, Molybdän, Zink oder Mangan.

**14.** Substrat gemäß einem der vorstehenden Ansprüche, wobei die Verschleißschutzschicht zumindest einen Bereich umfasst, welcher nicht elektrisch leitfähig bei Raumtemperatur ist, und wobei der Flächenwiderstand wenigstens 1 kΩ/square, bevorzugt wenigstens 0,5 MΩ/square und besonders bevorzugt wenigstens 2 MΩ/square beträgt.

**15.** Verwendung eines beschichteten Substrates gemäß einem der Ansprüche 1 bis 19 als optisches Bauteil wie Lupen, Linsen oder Filter, als Koch- oder als Heizfläche, als Sichtscheibe im Fahrzeugbereich, für Uhrengläser, für Brillen, etwa VR-Brillen oder AR-Brillen, als Ofen- oder Kaminsichtscheibe, für Glas- oder Glaskeramikbauteile in Haushaltsgeräten, z.B. als Kochfläche oder als Arbeitsplatte, für Kühlschrank- oder Küchenfronten oder als Display beispielsweise für Tablet-PCs oder Mobiltelefone, insbesondere als Touchdisplay oder als Teil eines Gehäuses eines mobilen elektronischen Geräts, beispielsweise für Tablet-PCs oder Mobiltelefone.

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPÄISCHER RECHERCHENBERICHT

**Nummer der Anmeldung**

**EP 21 21 3484**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/355172 A1 (PAULSON CHARLES ANDREW [US]) 14. Dezember 2017 (2017-12-14) * Ansprüche 1,11 * ----- | 1-15 | INV. C03C10/00 C03C17/22 C03C17/245 |
| X | US 10 781 133 B2 (SCHOTT AG [DE]) 22. September 2020 (2020-09-22) * Ansprüche 1,7 * ----- | 1-15 | C03C17/34 |
| X | US 2015/376056 A1 (DAMM THORSTEN [DE] ET AL) 31. Dezember 2015 (2015-12-31) | 1-5,7-15 | |
| A | * Beispiele 10-12; Tabelle 1 * ----- | 6 | |

**RECHERCHIERTE SACHGEBIETE (IPC)**

C03C

Der vorliegende Recherchenbericht wurde für alle Patentansprüche erstellt

| Recherchenort | Abschlußdatum der Recherche | Prüfer |
|---|---|---|
| **München** | **30. April 2022** | **Saldamli, Saltuk** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.....................................................................................

& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30−04−2022

| Im Recherchenbericht angeführtes Patentdokument | Datum der Veröffentlichung | Mitglied(er) der Patentfamilie | Datum der Veröffentlichung |
|---|---|---|---|
| US 2017355172 A1 | 14−12−2017 | CN 109311738 A | 05−02−2019 |
| | | EP 3468931 A1 | 17−04−2019 |
| | | JP 2019520303 A | 18−07−2019 |
| | | KR 20190015565 A | 13−02−2019 |
| | | TW 201815720 A | 01−05−2018 |
| | | US 2017355172 A1 | 14−12−2017 |
| | | US 2020180267 A1 | 11−06−2020 |
| | | WO 2017218452 A1 | 21−12−2017 |
| US 10781133 B2 | 22−09−2020 | CN 105073673 A | 18−11−2015 |
| | | DE 102013102221 A1 | 11−09−2014 |
| | | EP 2964584 A1 | 13−01−2016 |
| | | JP 6338602 B2 | 06−06−2018 |
| | | JP 2016517381 A | 16−06−2016 |
| | | KR 20150126627 A | 12−11−2015 |
| | | US 2015376056 A1 | 31−12−2015 |
| | | WO 2014135490 A1 | 12−09−2014 |
| US 2015376056 A1 | 31−12−2015 | CN 105073673 A | 18−11−2015 |
| | | DE 102013102221 A1 | 11−09−2014 |
| | | EP 2964584 A1 | 13−01−2016 |
| | | JP 6338602 B2 | 06−06−2018 |
| | | JP 2016517381 A | 16−06−2016 |
| | | KR 20150126627 A | 12−11−2015 |
| | | US 2015376056 A1 | 31−12−2015 |
| | | WO 2014135490 A1 | 12−09−2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112014001619 A1
- DE 102017102642 A1
- DE 102012107129 A1
- DE 102011081234 A1
- EP 2994784 B1
- WO 2017048700 A1